# EUROPEAN PATENT APPLICATION

(11) **EP 4 726 515 A1**
(43) Date of publication of application: **15.04.2026**
(21) Application number: 24843280.9
(22) Date of filing: 23.05.2024
(51) Int. Cl.: G06F 3/04842, G06F 3/04817, G06F 1/16, G06F 9/451

(54) **ELECTRONIC DEVICE, METHOD, AND COMPUTER-READABLE STORAGE MEDIUM FOR CHANGING SCREEN DISPLAYED ON DISPLAY**

(30) Priority: 14.07.2023 KR 20230092078; 20.07.2023 KR 20230094939; 31.08.2023 KR 20230115887
(71) Applicant: Samsung Electronics Co., Ltd., Suwon-si, Gyeonggi-do 16677 (KR)
(72) Inventor: KIM, Wankyu, Suwon-si, Gyeonggi-do 16677 (KR); OH, Boa, Suwon-si, Gyeonggi-do 16677 (KR); YIM, Soeyoun, Suwon-si, Gyeonggi-do 16677 (KR); SHIN, Jongwoo, Suwon-si, Gyeonggi-do 16677 (KR); YOO, Hyunwoo, Suwon-si, Gyeonggi-do 16677 (KR); HAN, Yonggil, Suwon-si, Gyeonggi-do 16677 (KR)
(74) Representative: HGF
(86) International application number: PCT/KR2024/007013
(87) International publication number: WO 2025/018558

(57) **Abstract**

A processor of an electronic device according to one embodiment may be configured to display a first wallpaper screen on a display. The processor may be configured to identify a first input on the first wallpaper screen while the first wallpaper screen is displayed. The processor may be configured to display, in response to the first input, a first user interface screen on the display in place of the first wallpaper screen that has been displayed, wherein the first user interface screen is changeable along a first direction and includes a plurality of visual objects including a first visual object corresponding to the first wallpaper screen and a second visual object corresponding to a second wallpaper screen different from the first wallpaper screen.

## Description

### [Technical Field]

Various embodiments of the present disclosure relate to an electronic device, a method, and a computer-readable storage medium for changing a screen displayed on a display.

### [Background Art]

An electronic device having a form factor deformable using a flexible display is being developed. For example, the electronic device including a plurality of foldable housings may provide a user experience based on a shape of the electronic device to a user using the flexible display disposed on the plurality of housings. For example, based on a shape of the flexible display folded or unfolded by an external force of the user, the electronic device may change content displayed on the flexible display.

### [Disclosure]

### [Technical Solution]

According to an embodiment, an electronic device may comprise a housing, a display of which at least a portion is accommodated in the housing, at least one processor comprising processing circuitry, and memory, comprising one or more storage mediums, storing instructions. The instructions, when executed by the at least one processor individually or collectively, may cause the electronic device to display a first wallpaper screen on the display. The instructions, when executed by the at least one processor individually or collectively, may cause the electronic device to identify a first input on the first wallpaper screen while the first wallpaper screen is displayed. The instructions, when executed by the at least one processor individually or collectively, may cause the electronic device to, in response to the first input, display, on the display, a first user interface screen in place of the displayed first wallpaper screen, the first user interface screen including a plurality of visual objects, changeable along a first direction, including a first visual object corresponding to the first wallpaper screen and a second visual object corresponding to a second wallpaper screen different from the first wallpaper screen. The instructions, when executed by the at least one processor individually or collectively, may cause the electronic device to, while the first user interface screen is displayed, for the first user interface screen, in response to a second input corresponding to a second direction different from the first direction, display, on the display, a second user interface screen in place of the first user interface screen, the second user interface screen capable of selecting whether to maintain execution of at least one widget among one or more widgets installed in the electronic device through the display.

According to an embodiment, in a method of an electronic device, the method may comprise displaying a first wallpaper screen on a display. The method may comprise identifying a first input on the first wallpaper screen while the first wallpaper screen is displayed. The method may comprise, in response to the first input, displaying, on the display, a first user interface screen in place of the first wallpaper screen, the first user interface screen including a plurality of visual objects, changeable along a first direction, including a first visual object corresponding to the first wallpaper screen and a second visual object corresponding to a second wallpaper screen different from the first wallpaper screen. The method may comprise, while the first user interface screen is displayed, for the first user interface screen, in response to a second input corresponding to a second direction different from the first direction, displaying, on the display, a second user interface screen in place of the first user interface screen, the second user interface screen capable of selecting whether to maintain execution of at least one widget among one or more widgets installed in the electronic device through the display.

According to an embodiment, in a computer-readable storage medium storing one or more programs, the one or more programs may be configured to, when executed by a processor of an electronic device, cause the electronic device to display a first wallpaper screen on a display. The one or more programs may be configured to cause the electronic device to identify a first input on the first wallpaper screen while the first wallpaper screen is displayed. The one or more programs may be configured to cause the electronic device to, in response to the first input, display, on the display, a first user interface screen in place of the first wallpaper screen, the first user interface screen including a plurality of visual objects, changeable along a first direction, including a first visual object corresponding to the first wallpaper screen and a second visual object corresponding to a second wallpaper screen different from the first wallpaper screen. The one or more programs may be configured to cause the electronic device to, while the first user interface screen is displayed, for the first user interface screen, in response to a second input corresponding to a second direction different from the first direction, display, on the display, a second user interface screen in place of the first user interface screen, the second user interface screen capable of selecting whether to maintain execution of at least one widget among one or more widgets installed in the electronic device through the display.

### [Description of the Drawings]

FIG. 1 illustrates an example of a block diagram of an electronic device according to an embodiment.
FIGS. 2A and 2B illustrate an example of a positional relationship between a first housing part and a second housing part in an unfolding state and a folding state of an electronic device according to an embodiment.
FIGS. 3A and 3B illustrate an example of positions of a plurality of acceleration sensors in an electronic device according to an embodiment.
FIGS. 4A to 4C illustrate an example of a wallpaper screen displayed on a cover display of an electronic device according to an embodiment.
FIGS. 5A to 5D illustrate an example of a state where an electronic device changes a wallpaper screen to be displayed on a cover display according to an embodiment.
FIGS. 6A to 6D illustrate an example of a screen displayed on a flexible display by an electronic device based on identifying a change from a folded state to an unfolded state according to an embodiment.
FIG. 7 illustrates an example of a flowchart indicating an operation of an electronic device according to an embodiment.
FIG. 8 illustrates an example of a flowchart indicating an operation of an electronic device according to an embodiment.
FIG. 9 is a block diagram of an electronic device in a network environment according to various embodiments.

### [Mode for Invention]

Hereinafter, various embodiments of the present document will be described with reference to the accompanying drawings.

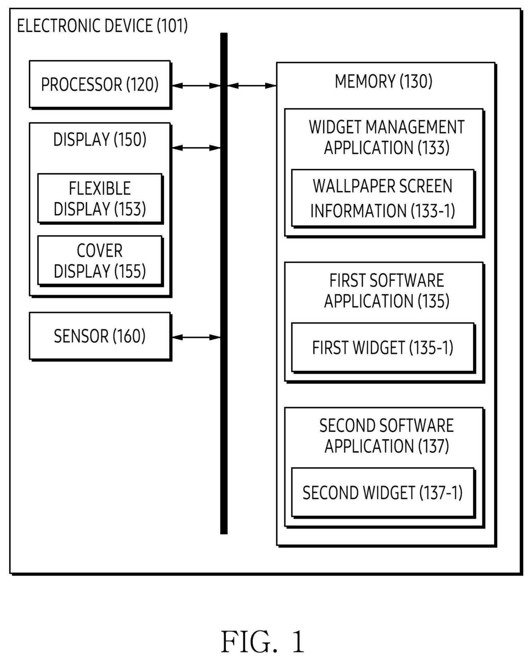

FIG. 1 illustrates an example of a block diagram of an electronic device according to an embodiment. Referring to FIG. 1, in an embodiment, in terms of being owned by a user, an electronic device 101 may be referred to as a terminal (or a user terminal). The terminal may include, for example, a personal computer (PC) such as a laptop and a desktop. The terminal may include, for example, a smartphone, a smartpad, and/or a tablet PC. The terminal may include a smart accessory such as a smartwatch and/or a head-mounted device (HMD).

According to an embodiment, the electronic device 101 may include at least one of a processor 120, memory 130, a display 150, or a sensor 160. The processor 120, the memory 130, the display 150, and the sensor 160 may be electronically and/or operably coupled with each other by an electronical component such as a communication bus. Although illustrated based on different blocks, an embodiment is not limited thereto. A type and/or the number of hardware components included in the electronic device 101 is not limited to those illustrated in the block diagram of FIG. 1. For example, the electronic device 101 may include only part of hardware exemplified based on the block diagram of FIG. 1.

According to an embodiment, the processor 120 of the electronic device 101 may include a hardware component for processing data based on one or more instructions. For example, the hardware component for processing data may include an Arithmetic and Logic Unit (ALU), a Floating Point Unit (FPU), a Field Programmable Gate Array (FPGA), an Application Processor (AP), and/or a Central Processing Unit (CPU). The number of processors 120 may be one or more. For example, the processor 120 may have a structure of a multi-core processor such as a dual core, a quad core, or a hexa core.

According to an embodiment, the memory 130 of the electronic device 101 may include a hardware component for storing data and/or an instruction inputted and/or outputted by the processor 120. The memory 130 may include, for example, a volatile memory, such as a Random-Access Memory (RAM), and/or a non-volatile memory, such as a Read-Only Memory (ROM). The volatile memory may include, for example, at least one of a Dynamic RAM (DRAM), a Static RAM (SRAM), a Cache RAM, and a Pseudo SRAM (PSRAM). The non-volatile memory may include, for example, at least one of a Programmable ROM (PROM), an Erasable PROM (EPROM), an Electrically Erasable PROM (EEPROM), a flash memory, a hard disk, a compact disc, and an Embedded Multi Media Card (eMMC).

According to an embodiment, the display 150 of the electronic device 101 may output visualized information to the user. For example, the display 150 may be controlled by a controller, such as a graphic processing unit (GPU) and output visualized information to the user. The display 150 may include a liquid crystal display (LCD), a plasma display panel (PDP), and/or one or more light emitting diodes (LEDs). The LED may include an organic LED (OLED). The display 150 may include electronic paper. The display 150 may have at least partially bent shape and/or may have a deformable shape.

According to an embodiment, the display 150 of the electronic device 101 may include a sensor (e.g., a touch sensor panel (TSP)) for detecting an external object (e.g., a finger of the user) on the display 150. For example, based on the TSP, the electronic device 101 may detect an external object in contact with the display 150 or floating on the display 150. In response to detecting the external object, the electronic device 101 may execute a function associated with a specific visual object corresponding to a position of the external object on the display 150 among visual objects being displayed in the display 150. The display 150 may include a flexible display 153 and/or a cover display 155 having at least partially bent shape and/or having a deformable shape.

According to an embodiment, the flexible display 153 and/or the cover display 155 of the electronic device 101 may be provided to output visualized information to the user, similar to the display 150. Among descriptions of the flexible display 153 and descriptions of the cover display 155, descriptions overlapping those of the display 150 are omitted for convenience of explanation.

For example, the cover display 155 may be disposed on a different side from a side of the electronic device 101 on which the flexible display 153 is disposed. A position of the cover display 155 may be disposed on a side of a housing viewable in a state where the flexible display 153 is covered (e.g., a folded state). The cover display 155 may be implemented similarly to the display 150. The cover display 155 may be referred to as a sub-display, an external display, or a front display. Among the descriptions of the cover display 155, descriptions overlapping those of the display 150 are omitted for convenience of explanation.

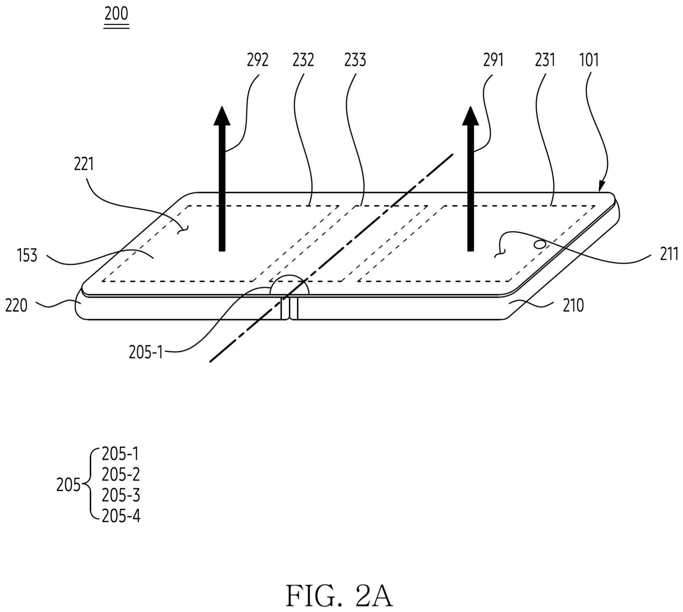

For example, a housing of the electronic device 101 may include a first housing part including a first side and a second side opposite the first side, and a second housing part including a third side and a fourth side opposite the third side. The electronic device 101 may include the flexible display 153 disposed on the first side of the first housing part and the third side of the second housing part. The electronic device 101 may include the flexible display 153 extending from the first side of the first housing part to the third side of the second housing part. The electronic device 101 may include the cover display 155 disposed on the second side of the first housing part. As an example, the electronic device 101 may include a camera (not illustrated) oriented in a direction in which the second side of the first housing part faces. For example, the electronic device 101 may identify an angle between the first housing part and the second housing part using the sensor 160. The electronic device 101 may identify a folded state, a sub-folded state, and/or an unfolded state based on the angle between the first housing part and the second housing part. An operation in which the electronic device 101 identifies a state based on the angle will be described later with reference to FIGS. 2A to 2B.

According to an embodiment, the sensor 160 of the electronic device 101 may generate electronic information that may be processed by the processor 120 and/or the memory 130 from non-electronic information associated with the electronic device 101. The electronic information generated by the sensor 160 may be stored in the memory 130, processed by the processor 120, and/or transmitted to another electronic device distinct from the electronic device 101. The number of sensors 160 may be one or more.

For example, the sensor 160 may include a Hall sensor for identifying an angle between housings included in the electronic device 101. The Hall sensor may include one or more magnets and/or one or more magnetic sensors. At least one of the one or more magnets or the one or more magnetic sensors included in the Hall sensor may be disposed at different positions in the electronic device 101. A positional relationship of the one or more magnets and/or the one or more magnetic sensors in the electronic device 101 may be changed according to a shape of the electronic device 101. The electronic device 101 may measure the change in the positional relationship through the one or more magnetic sensors. The change in the positional relationship may cause a change in a magnetic field formed by the one or more magnets. The electronic device 101 may obtain a power signal indicating the change in the magnetic field using the Hall sensor. For example, the electronic device 101 may distinguish a posture or a state (e.g., the folded state or the unfolded state) using the power signal obtained from the Hall sensor. For example, the electronic device 101 may receive data indicating a state of the electronic device 101 from the Hall sensor. For example, the Hall sensor may output data indicating a shape of the flexible display 153. The shape of the flexible display 153 may be changed by being folded or unfolded by a folding axis (e.g., a folding axis 237 to be described later in FIG. 2A). For example, the Hall sensor may output different data indicating the shape of the flexible display 153. An embodiment is not limited thereto, and the processor 120 according to an embodiment may identify the angle using an inertia measurement unit (IMU) sensor.

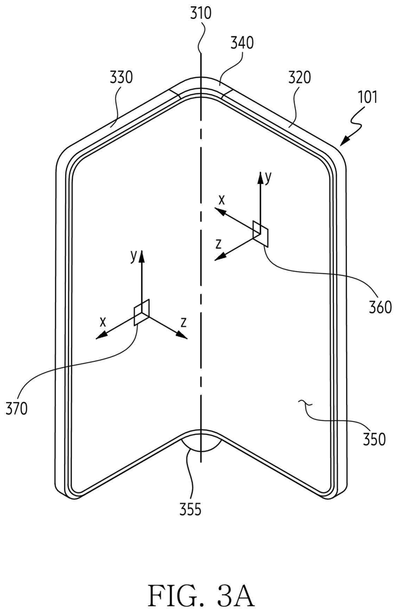

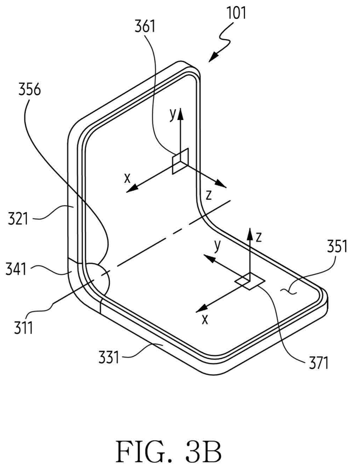

For example, the sensor 160 may include acceleration sensors (e.g., acceleration sensors 360, 361, 370, and 371 of FIGS. 3A and 3B) for measuring physical movement of the electronic device 101. The acceleration sensor may output electronic information indicating magnitude of gravitational acceleration measured at each of a plurality of specified axes (e.g., an x-axis, a y-axis, and a z-axis) perpendicular to each other. The processor 120 of the electronic device 101 according to an embodiment may measure a posture of the electronic device 101 in a physical space based on electronic information outputted from the acceleration sensor. The posture measured by the electronic device 101 may indicate an orientation of the electronic device 101 and/or a shape of the electronic device 101 measured by the acceleration sensor. The electronic device 101 may determine a mode of the electronic device 101 based on the measured posture. For example, the electronic device 101 may identify a mode corresponding to the posture of the electronic device 101 among specified modes including a landscape mode and a portrait mode as a plurality of specified modes.

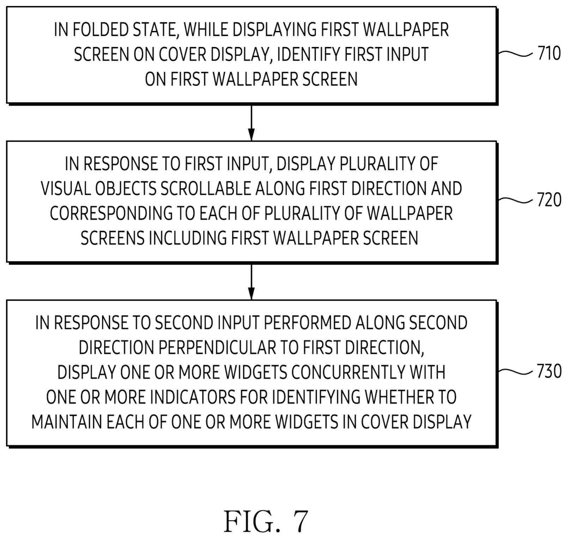

According to an embodiment, in the memory 130 of the electronic device 101, one or more instructions (or commands) indicating a computation and/or an operation to be performed by the processor 120 on data may be stored. A set of one or more instructions may be referred to as firmware, an operating system, a process, a routine, a sub-routine and/or an application. For example, the electronic device 101 and/or the processor 120 may perform at least one of operations of FIG. 7 when a set of a plurality of instruction distributed in a form of an operating system, firmware, a driver, and/or an application is executed. Hereinafter, an application being installed in the electronic device 101 may mean that one or more instructions provided in a form of an application are stored in the memory 130 of the electronic device 101, and that the one or more applications are stored in a format (e.g., a file having an extension specified by an operating system of the electronic device 101) executable by the processor 120 of the electronic device 101.

The electronic device 101 according to an embodiment may control display of at least one screen on the cover display 155 based on execution of a widget management application 133. The widget management application 133 may provide resources of a wallpaper screen, and the electronic device 101 may edit at least a portion of the wallpaper screen using the resources.

For example, the electronic device 101 may identify a wallpaper screen to be displayed on the cover display 155 using wallpaper screen information 133-1. The wallpaper screen may include a visual object indicating a time (e.g., a current time). The wallpaper screen may be referred to as a cover screen, a home screen, a launcher screen, a cover face, or a background screen. For example, the widget management application 133 may be referred to as a watch widget application in terms of including the visual object indicating a time. The widget management application 133 may be an example of an application provided by the operating system of the electronic device 101. The widget management application 133 may include a software application provided by the operating system to manage at least one widget executable through the cover display 155. The widget management application 133 may be referred to as a widget launcher application in terms of managing the at least one widget. However, it is not limited thereto. As an example, the widget management application 133 may be an example of an application (e.g., a clock face application) installed by the user to change a screen displayed on the cover display 155.

For example, the memory 130 of the electronic device 101 may include a plurality of software applications 135 and 137. The plurality of software applications 135 and 137 may be provided by a different user (or server) from the user of the electronic device 101. The plurality of software applications 135 and 137 may include a software application providing a type of widget (e.g., a widget associated with music, a widget associated with a timer, a widget associated with weather, and/or a widget associated with recording) executable by the widget management application 133 of the electronic device 101. For example, the widget may include a user interface (UI) element used to notify the user of at least one information. The electronic device 101 may provide at least one information to the user using the widget, or may perform at least one function using the widget.

For example, the electronic device 101 may cause execution of a plurality of widgets 135-1 and 137-1 provided by the plurality of software applications 135 and 137 installed in the electronic device 101 based on the execution of the widget management application 133. The electronic device 101 may edit each of the plurality of widgets 135-1 and 137-1 using the widget management application 133. The electronic device 101 may register the first widget 135-1 provided by the first software application 135 based on the execution of the widget management application 133. The electronic device 101 may register the first widget 135-1 in the widget management application 133 by linking the widget management application 133 and the first software application 135. The electronic device 101 may execute the first widget 135-1 registered using the widget management application 133.

For example, the electronic device 101 may use the widget management application 133 to display the second widget 137-1 of the second software application 137 on the cover display 155. The electronic device 101 may link the second software application 137 and the widget management application 133 to cause execution of the second widget 137-1 corresponding to the second software application 137, by using the widget management application 133. The electronic device 101 may display the second widget 137-1 in a user interface provided by the widget management application 133 by linking the widget management application 133 with the second software application 137.

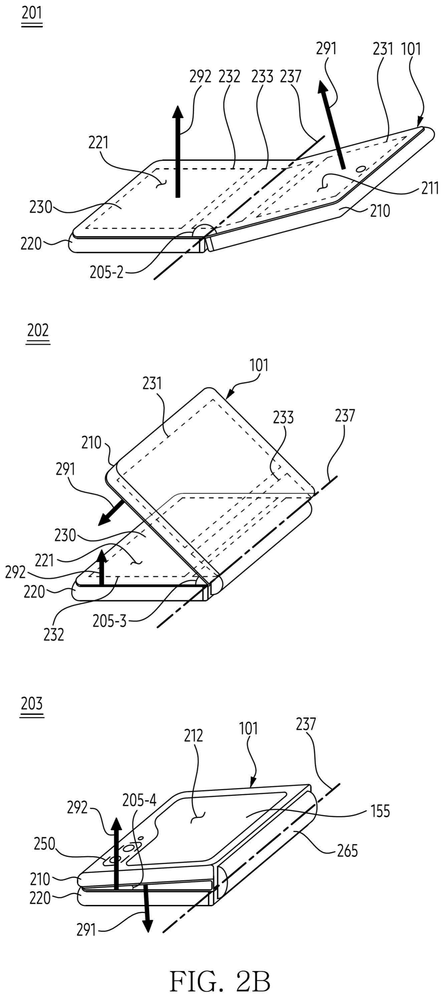

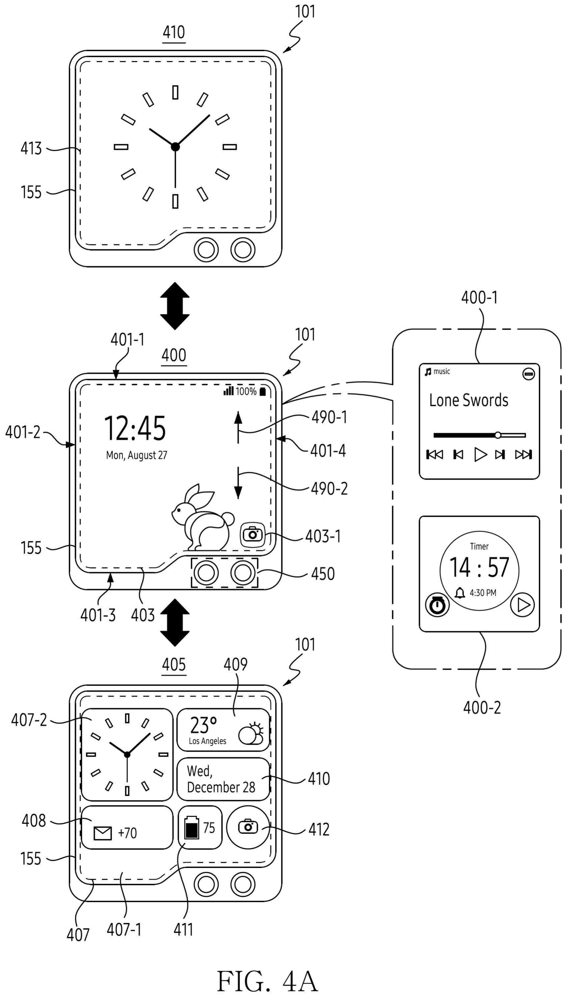

For example, the electronic device 101 may distinguish between a wallpaper screen and the plurality of widgets 135-1 and 137-1 and display them on the cover display 155. The electronic device 101 may temporarily refrain from displaying the plurality of widgets 135-1 and 137-1 while displaying the wallpaper screen on the cover display 155. However, it is not limited thereto. For example, the electronic device 101 may display the plurality of widgets 135-1 and 137-1 on the cover display 155 by overlapping the wallpaper screen. Descriptions of the wallpaper screen and the plurality of widgets 135-1 and 137-1 displayed by the electronic device 101 on the cover display 155 will be described later with reference to FIGS. 4A to 4C. Hereinafter, an example of the state of the electronic device 101 identified according to the angle of the electronic device 101 will be described later with reference to FIGS. 2A and 2B.

FIGS. 2A and 2B illustrate an example of a positional relationship between a first housing part and a second housing part in an unfolding state and a folding state of an electronic device according to an embodiment. An electronic device 101 of FIGS. 2A and 2B may be referred to as the electronic device 101 of FIG. 1. A first housing part 210, a second housing part 220, and a folding housing part 265 may be included in a housing of the electronic device 101. The electronic device 101 may include the first housing part 210 including a first side 211 and a second side 212 opposite the first side. The electronic device 101 may include the second housing part 220 including a third side 221 and a fourth side (not illustrated) opposite to the third side. The electronic device 101 may include the folding housing part 265 pivotably connecting the first housing part 210 and the second housing part 220. The folding housing part 265 may include a rotatable hinge structure. The folding housing part 265 may be referred to as a hinge assembly in terms of including a hinge structure rotating the first housing part 210 and the second housing part 220.

For example, at least a portion of a flexible display 153 may be disposed on a side (e.g., the first side 211) of the first housing part 210 and a side (e.g., the third side 221) of the second housing part. For example, at least a portion of the flexible display 153 may be disposed on the first side 211 and the third side 221 across the folding housing part 265. A first display area 231, a second display area 232, and a third display area 233 may be included in the flexible display 153. A cover display 155 may be disposed on the second side 212. The electronic device 101 may include a camera oriented in a direction in which the second side 212 faces. The camera may be disposed in a partial area 250 of the second side 212.

According to an embodiment, the electronic device 101 may provide an unfolding state (or an unfolded state) where the first housing part 210 and the second housing part 220 are fully folded out by the folding housing part 265. For example, referring to FIG. 2A, the electronic device 101 may be in a state 200, which is the unfolding state. For example, the state 200 may refer to a state where a first direction 291 in which the first side 211 faces corresponds to a second direction 292 in which the third side 221 faces. For example, in the state 200, the first direction 291 may be parallel to the second direction 292. For example, in the state 200, the first direction 291 may be the same as the second direction 292.

According to an embodiment, in the state 200, the first side 211 may form substantially one plane with the third side 221. For example, in the state 200, an angle 205-1 between the first side 211 and the third side 221 may be 180 degrees. For example, the state 200 may refer to a state where all of an entire display area of the flexible display 153 may be provided on substantially one plane. For example, the state 200 may refer to a state where all of the first display area 231, the second display area 232, and the third display area 233 may be provided on one plane. For example, in the state 200, the third display area 233 may not include a curved surface. For example, the unfolding state may be referred to as an outspread state (or an outspreading state), a fully unfolded state, an opened state, an unfolded state, a flat state, and/or a planar state. Hereinafter, different states of the electronic device 101 based on angles 205-2, 205-3, and 205-4 will be described later.

Referring to FIG. 2B, the electronic device 101 according to an embodiment may provide a folding state (or a folded state) where the first housing part 210 and the second housing part 220 are folded in by the folding housing part 265. For example, the electronic device 101 may be in the folding state including a state 201, a state 202, and a state 203. For example, the folding state including the state 201, the state 202, and the state 203 may refer to a state where the first direction 291 in which the first side 211 faces is distinguished from the second direction 292 in which the third side 221 faces. For example, in the state 201, an angle between the first direction 291 and the second direction 292 is 45 degrees, and the first direction 291 and the second direction 292 may be distinguished from each other. For example, in the state 202, an angle between the first direction 291 and the second direction 292 is 150 degrees, and the first direction 291 and the second direction 292 may be distinguished from each other. For example, in the state 203, an angle between the first direction 291 and the second direction 292 is substantially 180 degrees, and the first direction 291 and the second direction 292 may be distinguished from each other.

According to an embodiment, in the folding state, an angle between the first side 211 and the third side 221 may be greater than or equal to 0 degrees and less than 180 degrees. For example, in the state 201, the angle 205-2 between the first side 211 and the third side 221 may be 135 degrees. In the state 202, the angle 205-3 between the first side 211 and the third side 221 may be 30 degrees. In the state 203, the angle 205-4 between the first side 211 and the third side 221 may be substantially 0 degrees. For example, the folding state may be referred to as a folded state, a fully folded state, and/or a closed state.

In an embodiment, unlike the unfolding state, the folding state may include a plurality of sub-folding states. For example, referring to FIG. 2B, the folding state may include the plurality of sub-folding states including the state 203, which is a fully folding state where the first side 211 is substantially overlapped on the third side 221 by rotation provided through the folding housing part 265, and the state 201 and the state 202, which are intermediate folding states between the state 203 and the unfolding state (e.g., the state 200 of FIG. 2A). For example, as the first side 211 and the third side 221 face each other by the folding housing part 265, the electronic device 101 may provide the state 203 where an entire area of the first display area 231 is substantially fully overlapped on an entire area of the second display area 232. For example, the electronic device 101 may provide the state 203 where the first direction 291 is substantially opposite to the second direction 292. For example, the state 203 may refer to a state where the flexible display 153 is occluded from a field of view of a user viewing the electronic device 101. For example, in the state 203 (e.g., a fully folded state), the flexible display 153 may be substantially occluded by a housing of the electronic device 101. However, it is not limited thereto.

According to an embodiment, the flexible display 153 may be bent by the rotation provided through the folding housing part 265. For example, in the flexible display 153, unlike the first display area 231 and the second display area 232, the third display area 233 may be bent according to a folding operation. For example, the third display area 233 may be in a curvedly bent state to prevent damage to the flexible display 153 in the fully folding state. In the fully folding state, unlike the third display area 233 being curvedly bent, all of the first display area 231 may be fully overlapped on all of the second display area 232.

Referring to FIGS. 3A to 3B, an example in which the flexible display 153 of the electronic device 101 includes one folding display area (e.g., the third display area 233) or the electronic device 101 includes one folding housing part (e.g., the folding housing part 265) is illustrated, but this is for convenience of explanation. According to embodiments, the flexible display 153 of the electronic device 101 may include a plurality of folding display areas. For example, the flexible display 153 of the electronic device 101 may include two or more folding display areas, and the electronic device 101 may include two or more folding housing parts to provide each of the two or more folding areas.

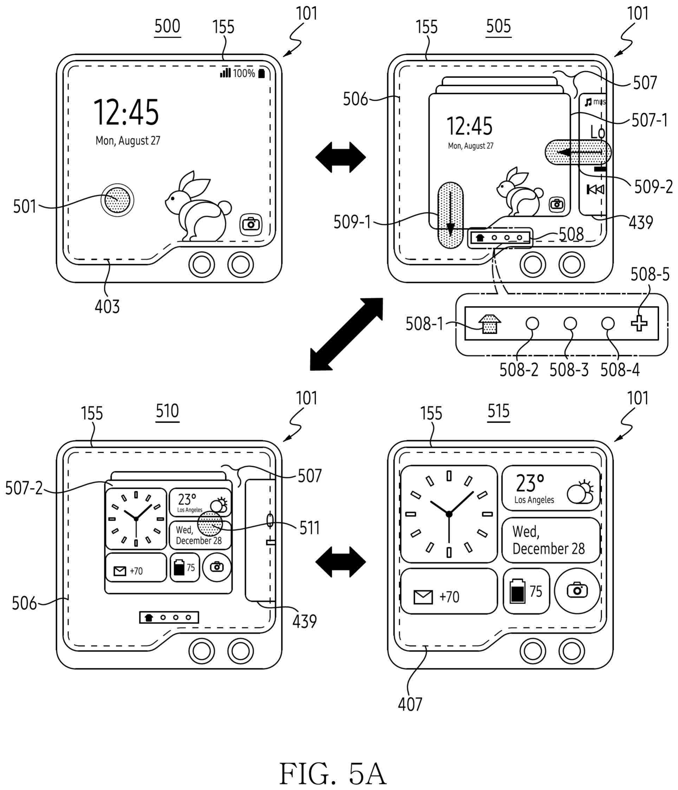

The electronic device 101 according to an embodiment may display at least one screen on the cover display in the folding state. An operation in which the electronic device 101 identifies an input specified for changing at least one screen displayed in the folding state will be described later in more detail with reference to FIGS. 5A to 5C.

Hereinafter, an exemplary description of an acceleration sensor for identifying a posture of the electronic device 101 will be described with reference to FIGS. 3A to 3B.

FIGS. 3A and 3B illustrate an example of positions of a plurality of acceleration sensors in an electronic device according to an embodiment. An electronic device 101 of FIG. 3A and an electronic device 101 of FIG. 3B may be an example of the electronic device 101 of FIG. 1. Referring to FIGS. 3A to 3B, examples of an electronic device distinguished by a shape and/or a structure of a housing part are illustrated. The electronic device of FIGS. 3A to 3B may be a terminal owned by different users. For example, the electronic device 101 may include housing parts (e.g., the first housing part 210 of FIG. 2A, the second housing part 220 of FIG. 2A, and the folding housing part 265 of FIG. 2A) deformable based on at least one folding axis. Acceleration sensors 360, 361, 370, and 371 may be included in the sensor 160 of FIG. 1. First housing parts 320 and 321 may be referred to the first housing part 210 of FIG. 2A. Second housing parts 330 and 331 may be referred to the second housing part 220 of FIG. 2A. Folding housing parts 340 and 341 may be referred to the folding housing part 265 of FIG. 2B. Folding axes 310 and 311 may be referred to the folding axis 237 of FIG. 2A. Flexible displays 350 and 351 may be referred to the flexible display 153 of FIG. 1.

Referring to FIG. 3A, a deformable housing of the electronic device 101 according to an embodiment may be distinguished by the folding housing part 340 including the folding axis 310, and the first housing part 320 and the second housing part 330 connected to the folding housing part 340. The flexible display 350 of the electronic device 101 according to an embodiment may be an example of a display disposed across the first housing part 320 and the second housing part 330.

According to an embodiment, the electronic device 101 may include the acceleration sensors 360 and 370 disposed in each of the first housing part 320 and the second housing part 330. The acceleration sensors 360 and 370 may be included in the electronic device 101 to measure a shape and/or a posture of the electronic device 101. Each of the acceleration sensors 360 and 370 may be included in a six-axis motion sensor including an acceleration sensor based on three axes of a +x-axis, a +y-axis, and a +z-axis of FIG. 3A, and a gyro sensor based on the three axes. The acceleration sensors 360 and 370 may identify acceleration applied to each of the three axes. The acceleration may be a vector based on a direction and/or magnitude of a net force applied to the electronic device 101. For example, the acceleration may be a vector indicating an amount of a change in speed of the electronic device 101 due to the net force. The net force applied to the electronic device 101 may include a combination of gravity or another force (e.g., a force applied to the electronic device 101 by a user holding the electronic device 101) distinguished from the gravity. According to an embodiment, the acceleration sensors 360 and 370 of the electronic device 101 may identify rotation of the acceleration sensor based on the one or more axes. According to an embodiment, the electronic device 101 may identify movement of the electronic device 101 based on the acceleration and/or the rotation identified by each of the acceleration sensors 360 and 370.

The electronic device 101 according to an embodiment may identify an angle 355 between the first housing part 320 and the second housing part 330 by using the acceleration sensors 360 and 370. Based on the angle 355, the electronic device 101 may identify a state (e.g., a folding state, an unfolding state, or a sub-unfolding state) of the electronic device 101. For example, in a state where the second housing part 330 is fixed, the electronic device 101 may obtain values of the three axes of the +x-axis, the +y-axis, and the +z-axis of FIG. 3A by using the acceleration sensor 360 included in the first housing part 320. The shape of the electronic device 101 according to an embodiment is not limited to an embodiment of FIG. 3A in which the folding axis 310 is formed parallel to a length among a width and the length shorter than the width of the flexible display 350.

Referring to FIG. 3B, an example of the electronic device 101 including the flexible display 351 having a width and a length longer than the width, and the folding axis 311 formed parallel to the width is illustrated. The deformable housing part of the electronic device 101 may include the folding housing part 341 including the folding axis 311, and the first housing part 321 and the second housing part 331 distinguished by the folding axis 311. The electronic device 101 may include the acceleration sensors 361 and 371 disposed in each of the first housing part 321 and the second housing part 331. The electronic device 101 may obtain an angle 356 between the first housing part 321, the second housing part 331, and the folding axis 311 by using the acceleration sensors 361 and 371. Based on the angle 356, the electronic device 101 may identify a state of the electronic device 101.

In an embodiment, the acceleration sensors 361 and 371 included in the electronic device 101 may be disposed on printed circuit boards (PCBs) included in each of the first housing part 321 and the second housing part 331. Among the PCBs, a PCB on which a processor (e.g., the processor 120 of FIG. 1) is disposed may be referred to as a main board. Among the PCBs, another PCB different from the PCB, which is the main board, may be referred to as a sub-board. Among the acceleration sensors 361 and 371, an acceleration sensor disposed on the main board may be referred to as a main acceleration sensor (e.g., a main six-axis acceleration sensor), and another acceleration sensor may be referred to as a sub-acceleration sensor (e.g., a sub-six axis acceleration sensor).

As described above, according to an embodiment, the electronic device 101 may include a plurality of acceleration sensors for identifying a shape and/or a posture of the deformable housing part. Acceleration measured by the acceleration sensors 360, 361, 370, and 371 disposed in the deformable housing parts 320, 321, 330, 331, 340, and 341 of the electronic device 101 according to an embodiment may be different from each other. For example, as portions in which the acceleration sensors are disposed move or rotate differently according to the shape of electronic device 101, the acceleration measured by the acceleration sensors may be different. Based on the measured acceleration in the electronic device 101, the electronic device 101 may identify the posture of the electronic device 101 based on a direction of gravitational acceleration obtained using the measured acceleration.

Hereinafter, an example of a wallpaper screen displayed on a cover display 155 by the electronic device 101 according to an embodiment in the folding state will be described with reference to FIGS. 4A to 4C.

FIGS. 4A to 4C illustrate an example of a wallpaper screen displayed on a cover display of an electronic device according to an embodiment. An electronic device 101 of FIGS. 4A to 4C may include the electronic device 101 of FIG. 1. Referring to FIGS. 4A to 4C, exemplary states 400, 405, and 410 where the electronic device 101 according to an embodiment displays screens 403, 407, and 413 on a cover display 155 in a folded state (e.g., the state 203 of FIG. 2B) are illustrated.

The electronic device 101 according to an embodiment may include the cover display 155 positioned on a side (e.g., the second side 212 of FIG. 2B) of a first housing part (e.g., the first housing part 210 of FIG. 2A). At least a portion of edges of the side may be matched to at least a portion of edges 401-1, 401-2, 401-3, and 401-4 of the cover display 155. For example, the cover display 155 may include the first edge 401-1, the third edge 401-3 parallelly separated from the first edge 401-1, the second edge 401-2 extending from an end of the first edge 401-1 to an end of the third edge 401-3, and the fourth edge 401-4 extending from another end of the first edge 401-1 to another end of the third edge 401-3.

For example, the first edge 401-1, the second edge 401-2, and/or the fourth edge 401-4 of the cover display 155 may be matched to at least one of the edges of the side (e.g., the second side 212 of FIG. 2B). For example, since a camera is disposed in a partial area 450 of the side (e.g., the second side 212 of FIG. 2B) of the first housing part (e.g., the first housing part 210 of FIG. 2A), at least a portion of the third edge 401-3 of the cover display 155 may have a bent shape. For example, the third edge 401-3 of the cover display 155 may be formed based on a curved shape by the partial area 450 in which the camera is disposed. In terms of including the third edge 401-3 formed based on the curved shape, the cover display 155 may be referred to as an L-cut display. However, it is not limited thereto. The number (e.g., two) of cameras disposed in the partial area 450 is not limited to those illustrated in FIGS. 4A to 4C.

Referring to FIG. 4A, in the state 400, the electronic device 101 according to an embodiment may display the screen (e.g., a first wallpaper screen) 403 on the cover display 155. The screen 403 may be provided by the widget management application 133 of FIG. 1. The screen 403 may include a visual object indicating a current time. The screen 403 may include a visual object indicating a state of charge (SOC) of a battery of the electronic device 101. The screen 403 may include a visual object 403-1 for initiating execution of a software application associated with a camera (e.g., a camera software application). The electronic device 101 may obtain the screen 403 by disposing one or more visual objects on a wallpaper image. The screen 403 may refer to a wallpaper screen or a cover screen (or a main screen) which the electronic device 101 sets as a default value to display at least one screen on the cover display 155. A color, a shape, and/or a component of the screen 403 may vary according to an embodiment. The electronic device 101 may change the screen 403 by using the widget management application 133 of FIG. 1.

The electronic device 101 according to an embodiment may change the screen 403 to another screen in response to a swipe input on the screen 403. For example, the electronic device 101 may enter the state 410 from the state 400 in response to a swipe input performed along a direction 490-1. The state 410 may include the electronic device 101 displaying a screen 413 different from the screen 403 on the cover display 155. The screen 413 may indicate another wallpaper screen distinguished from the screen 403.

For example, while displaying the screen 403, the electronic device 101 may match widgets 400-1 and 400-2 to the screen 403. The electronic device 101 may display at least one widget among the widgets 400-1 and 400-2 on the cover display 155 according to a swipe input having another direction perpendicular to a direction 490-2. The widgets 400-1 and 400-2 may be referred to as a widget set corresponding to the screen 403. An operation in which the electronic device 101 displays at least one widget among the widgets 400-1 and 400-2 in response to the swipe input having the other direction will be described later with reference to FIGS. 5A to 5D.

The electronic device 101 according to an embodiment may enter the state 405 in response to a swipe input having the direction 490-2.

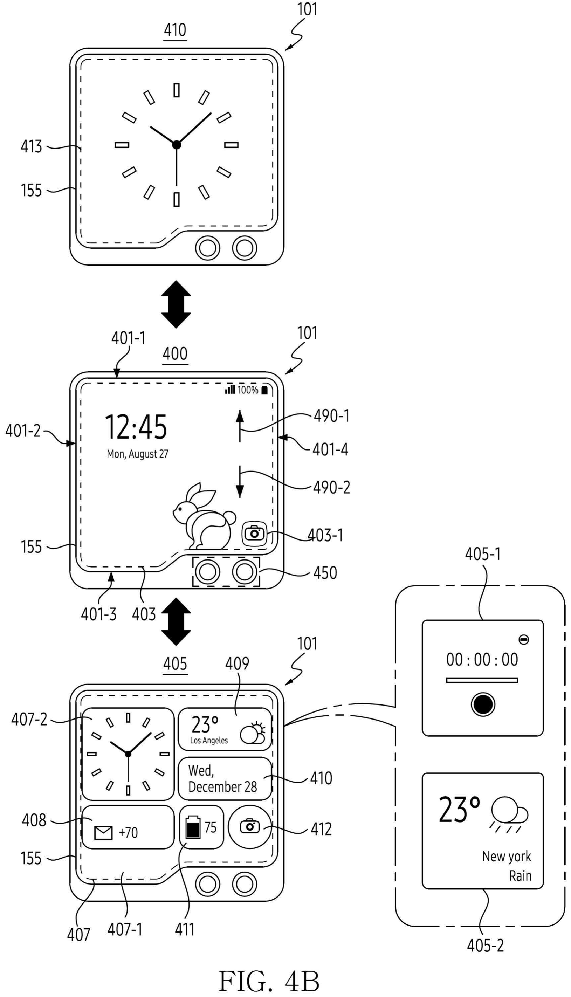

Referring to FIG. 4B, in the state 405 according to an embodiment, the electronic device 101 may display the screen (e.g., a second wallpaper screen) 407 on the cover display 155. The electronic device 101 may obtain the screen 407 based on execution of the widget management application 133 of FIG. 1. The electronic device 101 may obtain the screen 407 by using one or more activities. For example, the screen 407 may include a watch widget 407-2 and a wallpaper image 407-1 provided from the widget management application 133. The screen 407 may include a plurality of visual objects 408, 409, 410, 411, and 412 indicating a plurality of widgets provided from a plurality of software applications (e.g., the first software application 135 of FIG. 1 and the second software application 137 of FIG. 2) distinguished by the widget management application 133. However, it is not limited thereto. The electronic device 101 may generate another widget including the plurality of widgets by using the widget management application 133. The other widget may perform a plurality of functions provided from the plurality of widgets.

For example, the electronic device 101 may obtain a plurality of widgets 405-1 and 405-2 corresponding to the screen 407 using a neural network (e.g., a generator). As an example, the electronic device 101 may obtain the plurality of widgets 405-1 and 405-2 based on analyzing, through the neural network, a plurality of software applications executed while displaying the screen 407 on the cover display 155. The plurality of widgets 405-1 and 405-2 may be aligned along a direction (e.g., the other direction perpendicular to the direction 490-2) based on the screen 407, to be executable through the cover display 155. As an example, in response to a swipe input on the screen 407, at least one widget among the plurality of widgets 405-1 and 405-2 may be displayed on the cover display 155.

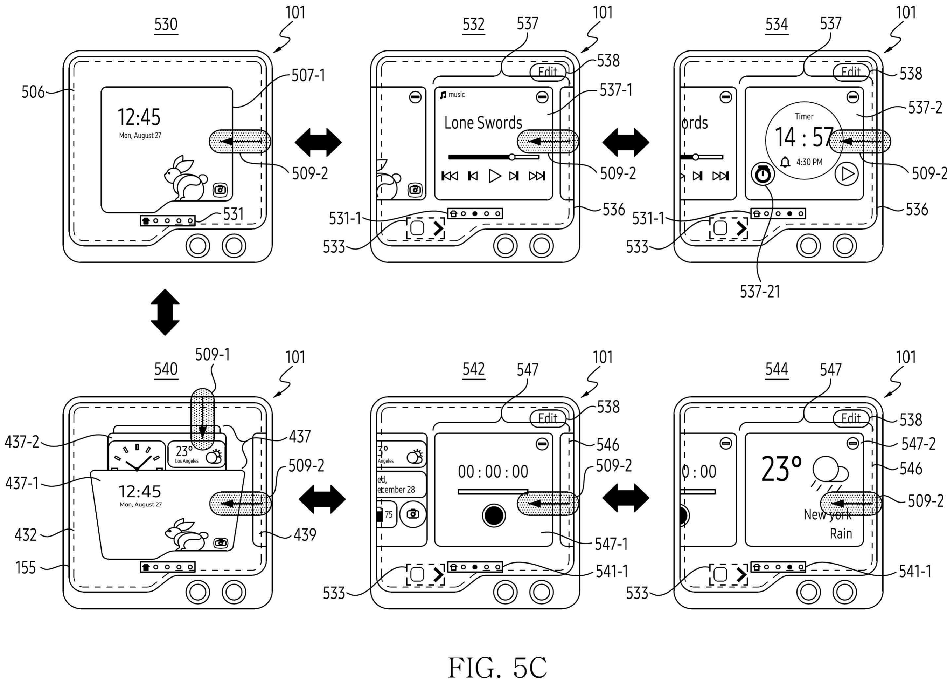

For example, the electronic device 101 may dispose the plurality of visual objects 407-2, 408, 409, 410, 411, and 412 on the wallpaper image 407-1 based on execution of the widget management application 133 of FIG. 1. The electronic device 101 may dispose each of the plurality of visual objects 407-2, 408, 409, 410, 411, and 412 on the wallpaper image 407-1 by linking with each of the widget management application 133 and the plurality of software applications corresponding to the plurality of visual objects 408, 409, 410, 411, and 412. The electronic device 101 may display, on the cover display 155, the plurality of visual objects 408, 409, 410, 411, and 412 indicating each of the plurality of widgets matched to the screen 407. For example, an operation in which the electronic device 101 matches the screen 407 with the plurality of widgets will be described later with reference to FIG. 5C.

The electronic device 101 according to an embodiment may initiate execution of the plurality of widgets corresponding to each of the plurality of visual objects 408, 409, 410, 411, and 412 in response to an input on the plurality of visual objects 408, 409, 410, 411, and 412. For example, the electronic device 101 may change from display of the screen 407 to display of a screen indicating each of the plurality of widgets corresponding to each of the plurality of visual objects 408, 409, 410, 411, and 412.

For example, the electronic device 101 may execute a widget of the widget management application 133 of FIG. 1 corresponding to the visual object 407-2 in response to an input on the visual object 407-2. The electronic device 101 may initiate execution of a widget of a software application (e.g., a notification software application) corresponding to the visual object 408 in response to an input on the visual object 408. For example, the electronic device 101 may display, on the cover display 155, a screen of the widget corresponding to the visual object 408. The electronic device 101 may display, on the cover display 155, a screen of a widget (e.g., a widget associated with weather) corresponding to the visual object 409. In response to an input indicating that the visual object 410 is selected, the electronic device 101 may initiate execution of a software application (e.g., a calendar software application) corresponding to the visual object 410. The electronic device 101 may display, on the cover display 155, a screen including a visual object indicating the state of charge (SOC) of the battery in response to an input on the visual object 411. The electronic device 101 may execute a function associated with a camera based on an input on the visual object 412. The electronic device 101 may display, on the cover display 155, a preview image obtained from the camera. However, it is not limited thereto. The electronic device 101 may change positions of the plurality of visual objects 407-2, 408, 409, 410, 411, and 412 disposed in the screen 407 by using the widget management application 133 of FIG. 1.

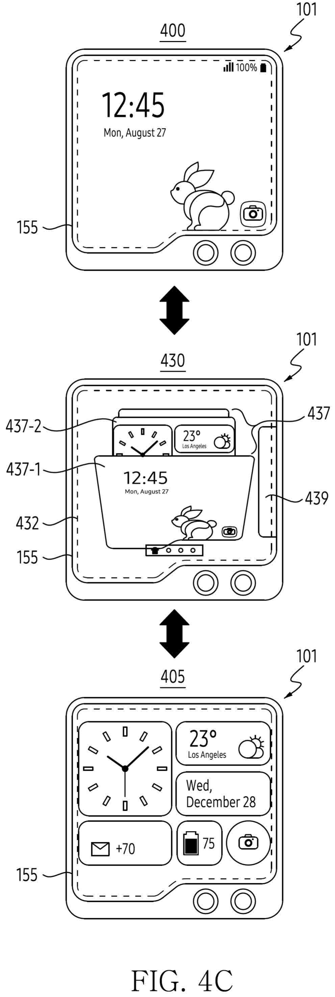

Referring to FIG. 4C, an exemplary sub-state 430 where the electronic device 101 according to an embodiment displays a screen 432 (or a user interface) including a plurality of visual objects 437 for entering the state 405 from the state 400 is illustrated. For example, in the state 400, the electronic device 101 may enter the state 430 in response to a swipe input performed along at least one direction among the direction 490-1 and the direction 490-2. The electronic device 101 may identify the visual objects 437 including a visual object 437-1 indicating the screen 403 and a visual object 437-2 indicating the screen 407. The visual objects 437 may indicate wallpaper screens (or screens of the main screen) set to be displayed on the cover display 155. The visual objects 437 may be aligned along the at least one direction in the screen 432. The visual objects 437 may be aligned along at least one direction, based on a specified order in the screen 432. Each of the visual objects 437 may be aligned by overlapping. For example, the visual object 437-1 may be displayed by overlapping at least a portion of the visual object 437-2. The electronic device 101 may concurrently display an indicator indicating the number of the visual objects 437. Using the indicator, the electronic device 101 may indicate the number and/or an order of the visual objects 437.

All of the visual objects 437 according to an embodiment may be displayed in the screen 432 without overlapping each other. The electronic device 101 may dispose all of the visual objects 437 in the screen 432 based on a grid shape. The electronic device 101 may dispose all of the visual objects 437 in the screen 432 according to a specified order. For example, the electronic device 101 may dispose the visual objects 437 according to the specified order with respect to one sub-pixel based on the grid shape. As an example, the electronic device 101 may dispose a visual object (e.g., the visual object 437-1) having a first order in a sub-pixel corresponding to a position corresponding to an upper left end. The electronic device 101 may emphasize and display the visual object in order to guide that the visual object is selected. However, it is not limited thereto.

For example, the screen 432 may be referred to as a user interface (e.g., a first user interface screen) for selecting at least one visual object among the visual objects 437. In response to a swipe input performed along the at least one direction in the screen 432, the electronic device 101 may select at least one visual object among the visual objects 437. The screen 432 may include a widget 439 matched to the selected at least one visual object. As an example, the widget 439 may include at least one of the widgets 400-1 and 400-2 or the widgets 405-1 and 405-2. The widget 439 may include an execution screen of the widget 439. The execution screen may be changed while the electronic device 101 executes the widget 439.

For example, the electronic device 101 may gradually refrain from displaying the visual object 437-1 according to the swipe input having the at least one direction. The electronic device 101 may adjust an alpha value (e.g., a parameter indicating transparency) for the visual object 437-1 according to the swipe input. According to the swipe input, the electronic device 101 may change a shape and/or a size of the visual object 437-1. The electronic device 101 may gradually change from display of the visual object 437-1 to display of the visual object 437-2 according to a swipe input. The electronic device 101 may represent an animation effect of gradually switching from the screen 403 to the screen 405 through the sub-state 430. The electronic device 101 may enter the state 405 after gradually refraining from (or ceasing) the display of the visual object 437-1 according to a swipe input. However, it is not limited thereto. For example, the electronic device 101 may change from the display of the visual object 437-1 to the display of the visual object 437-2 according to a swipe input. After the change, the electronic device 101 may enter the state 405 based on an input (e.g., a touch input) for displaying a wallpaper screen (e.g., the screen 407) corresponding to the visual object 437-2 on the cover display 155.

As described above, the electronic device 101 according to an embodiment may display at least one screen (e.g., the screens 405 or 407) on the cover display 155 in the folded state. The electronic device 101 may dispose visual objects indicating at least one widget on at least one screen. Based on disposing the visual objects on at least one screen, the electronic device 101 may provide a user with at least one screen having a function substantially similar to a home screen provided by a launcher software application (e.g., a software application for launching another software application). Based on displaying at least one screen on the cover display 155, the electronic device 101 may provide a user interface (UI) available through the flexible display 153 as a service available through the cover display 155.

Hereinafter, an example of an operation in which the electronic device 101 according to an embodiment changes a screen displayed on the cover display will be described with reference to FIG. 5A.

FIGS. 5A to 5C illustrate an example of a state where an electronic device changes a wallpaper screen to be displayed on a cover display according to an embodiment. An electronic device 101 of FIGS. 5A to 5C may be referred to the electronic device 101 of FIG. 1.

Referring to FIG. 5A, in a state 500, the electronic device 101 according to an embodiment may display a screen 403 on a cover display 155. The electronic device 101 may identify an input 501 using the cover display 155. The electronic device 101 may identify the input 501 based on identifying interrupts for at least a portion of the screen 403 during a specified time. For example, the input 501 may be referred to as a long press input.

The electronic device 101 according to an embodiment may enter a state 505 based on identifying the input 501. In the state 505, the electronic device 101 may display a plurality of visual objects 507 indicating a plurality of wallpaper screens including the screen 403. The electronic device 101 may display a user interface screen 506 including the plurality of visual objects 507. The electronic device 101 may display the plurality of visual objects 507 scrollable along a first direction 509-1 and corresponding to each of a plurality of screens including the screen 403.

For example, the user interface screen 506 may include a user interface for changing a wallpaper screen to be displayed on the cover display 155. The state 505 may be referred to as an editing mode in terms of including the electronic device 101 displaying the user interface. The user interface screen 506 may display an execution screen for a widget 439 corresponding to the screen 403. The widget 439 corresponding to the screen 403 in the state 505 may be referred to the widget 400-1 of FIG. 4A.

For example, the electronic device 101 may guide the plurality of visual objects 507 and a plurality of widgets displayable on the cover display 155 to a user, by using the user interface screen 506. The electronic device 101 may display, on the cover display 155, an indicator 508 indicating the number of the plurality of widgets and/or an order of the plurality of widgets. For example, the indicator 508 may include visual elements (e.g., dot) corresponding to the number of the plurality of widgets. The indicator 508 may include a visual element 508-1 indicating positions of the plurality of visual objects 507 in the user interface screen 506. The indicator 508 may indicate the number of pages (or screens indicating a page) included in the user interface screen 506. The indicator 508 may include visual elements 508-2, 508-3, and 508-4 corresponding to each of the plurality of widgets. The indicator 508 may include a visual element 508-5 corresponding to a page indicating whether a widget is added. The visual element 508-5 may have a different form distinguished from the visual elements 508-2, 508-3, and 508-4. The electronic device 101 may dispose the plurality of visual objects 507 and/or the plurality of widgets in each of the pages.

For example, in a case that another swipe input corresponding to the second direction 509-2 is identified after displaying a screen corresponding to at least one of the visual element 508-4 or the visual element 508-5 according to a swipe input corresponding to a second direction 509-2, the electronic device 101 may display a screen corresponding to the visual element 508-1 on the cover display 155.

The user interface screen 506 may include at least a portion of at least one widget among the plurality of widgets together with the plurality of visual objects 507.

For example, in a case of displaying, on the cover display 155, a page including the plurality of visual objects 507 and/or the plurality of widgets, the electronic device 101 may emphasize and display a visual element indicating the page (e.g., the visual element 508-1). For example, the indicator 508 may be referred to as pagination, dot pagination, or a pagination object in terms of indicating the number of pages.

Based on displaying the user interface screen 506, the electronic device 101 according to an embodiment may identify whether to change a wallpaper screen or whether to register at least one executable widget using the cover display 155. For example, based on identifying a swipe input having a specified direction using the user interface screen 506, the electronic device 101 may identify whether to change a wallpaper screen or whether to register at least one executable widget using the cover display 155.

For example, the electronic device 101 may identify a swipe input performed along the first direction 509-1. The electronic device 101 may identify the swipe input for changing a visual object 507-1. The electronic device 101 may arrange the plurality of visual objects 507 along the first direction 509-1 at a position corresponding to the visual element 508-1 of the user interface screen 506. The electronic device 101 may change an order (or a position) of each of the plurality of visual objects 507 arranged along the first direction 509-1 based on the swipe input. The electronic device 101 may enter a state 510 based on identifying the swipe input having the first direction 509-1 while displaying the visual object 507-1 on the cover display 155.

In the state 510 according to an embodiment, the user interface screen 506 may display an execution screen for the widget 439 corresponding to a screen 407. The widget 439 corresponding to the screen 407 in the state 510 may be referred to the widget 405-1 of FIG. 4B. For example, the electronic device 101 may temporarily refrain from displaying the visual object 507-1 based on identifying the swipe input having the first direction 509-1. Based on temporarily refraining from displaying the visual object 507-1, the electronic device 101 may display a visual object 507-2 on the cover display 155. The visual object 507-2 may indicate the other screen 407 distinguished from the screen 403 corresponding to the visual object 507-1. Since the electronic device 101 indicates pages arranged along the second direction 509-2 in the user interface screen 506 using the indicator 508, it may display the visual element 508-1 with emphasis while changing an order of each of the plurality of visual objects 507 within the same page. For example, the second direction 509-2 may include a direction perpendicular to the first direction 509-1. However, it is not limited thereto.

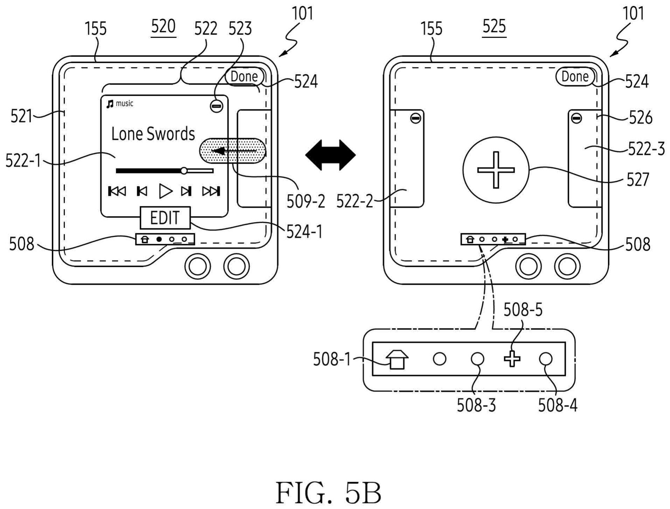

In the state 510 where the visual object 507-2 is displayed on the cover display 155 according to an order of the plurality of visual objects 507, the electronic device 101 according to an embodiment may identify an input 511 on the visual object 507-2. The input 511 may include an input indicating termination of the editing mode. The input 511 may include an input indicating that the visual object 507-2 is selected. The electronic device 101 may enter the state 515 based on identifying the input 511. For example, in the state 515, the electronic device 101 may display the screen 407 corresponding to the visual object 507-2 on the cover display 155. In the states 505 and 510 indicating the editing mode, the electronic device 101 may change a screen (e.g., a wallpaper screen) to be displayed on the cover display by using a swipe input based on the first direction 509-1. Hereinafter, an example of an operation in which the electronic device 101 registers widgets using the cover display 155 will be described later with reference to FIG. 5B.

Referring to FIG. 5B, in a state 520 according to an embodiment, the electronic device 101 may display, on the cover display 155, a user interface screen 521 including visual objects 522 indicating one or more widgets. For example, in response to a swipe input performed along the second direction 509-2 in the state 505 of FIG. 5A, the electronic device 101 may enter the state 520 from the state 505. The state 520 may be referred to as a widget editing mode for the electronic device 101 to register (or release) at least one widget using the cover display. The user interface screen 521 may be included in the user interface screen 506 of FIG. 5A. The user interface screen 521 may indicate at least one of one or more pages included in the user interface screen 506 of FIG. 5A. As an example, in a case that a widget corresponding to at least one of the one or more pages is editable, the electronic device 101 may display a visual object 524-1 indicating editing by overlaying it on the at least one. However, it is not limited thereto.

For example, the electronic device 101 may indicate an order of a visual object 522-1 by using an indicator 508. The electronic device 101 may emphasize and display a visual element indicating the order of the visual object 522-1 by using the indicator 508. For example, the electronic device 101 may display, on the cover display 155, each of the visual objects 522 indicating the one or more widgets concurrently with one or more indicators (e.g., an indicator 523) to identify whether to maintain the one or more widgets. The electronic device 101 may display the indicator 523 as at least a portion of a user interface screen. The electronic device 101 may display the indicator 523 associated with each of the one or more widgets.

For example, in a case of identifying an input to select the indicator 523 while displaying the visual object 522-1, the electronic device 101 may cancel registration of a widget for the visual object 522-1. The electronic device 101 may refrain from displaying the visual object 522-1 based on canceling the registration of the widget. For example, the electronic device 101 may identify available widgets through the cover display 155 in response to an input indicating that the indicator 523 is selected. As an example, each of the available widgets may be matched to each of the screens 403 and 407 of FIGS. 4A to 4B. An operation in which the electronic device 101 matches each of the screens and each of the widgets will be described later in more detail with reference to FIG. 5C.

For example, the electronic device 101 may identify a swipe input having the second direction 509-2 while displaying the visual object 522-1. The swipe input may include an input for changing from a page including the visual object 522-1 to another page. In response to the swipe input, the electronic device 101 may display, on the cover display 155, another visual object positioned next to the visual object 522-1 among the plurality of visual objects 522. Based on displaying the other visual object, the electronic device 101 may emphasize and display a visual element (e.g., a visual element in the indicator 508) corresponding to a position of the other visual object.

For example, the electronic device 101 may identify the swipe input having the second direction 509-2 while displaying the visual object 522-1 on the cover display 155. In response to the swipe input, the electronic device 101 may display another visual object distinguished from the visual object 522-1 on the cover display. The other visual object may indicate another widget distinguished from the widget corresponding to the visual object 522-1.

For example, the electronic device 101 may identify one or more swipe inputs based on the number of times exceeding the number of the visual objects 522. The electronic device 101 may enter a state 525 based on identifying the one or more swipe inputs.

In the state 525 according to an embodiment, the electronic device 101 may display a screen 526 indicating a last page included in the user interface screen 521. The electronic device 101 may emphasize and display a visual element indicating the last page by using the indicator 508 while displaying the screen 526. The electronic device 101 may display the screen 526 including a visual object 527 (or a UI element) for registering a widget. The electronic device 101 may register (or activate) at least one widget displayable through the cover display 155 in response to an input on the visual object 527. For example, the electronic device 101 may display, on the cover display 155, a user interface (not illustrated) for registering the at least one widget based on the input on the visual object 527. In a case that the at least one widget is registered using the user interface, the electronic device 101 may change the number of visual elements included in the indicator 508 indicating the number or an order of widgets. However, it is not limited thereto.

In the state 525, the electronic device 101 according to an embodiment may dispose a page screen for adding a widget between a widget 522-2 and a widget 522-3. For example, based on disposing the page screen, the electronic device 101 may at least temporarily dispose a position of the visual element 508-5 in the indicator 508 between a visual element 508-3 and a visual element 508-4. The visual element 508-3 may correspond to the widget 522-2, and the visual element 508-4 may correspond to the widget 522-3. The electronic device 101 according to an embodiment may terminate editing in response to an input on a visual object 524 indicating completion of the editing. Based on the input, the electronic device 101 may dispose the position of the visual element 508-5 in the indicator 508 at a position of the visual element 508-5 in the state 505 of FIG. 5A.

The electronic device 101 according to an embodiment may map first widgets to each of the screen 403 of FIG. 4A and the screen 407 of FIG. 4A. The first widgets mapped to the screen 403 may be the same as the first widgets mapped to the screen 407. In a case that the first widgets mapped to the screen 407 are changed to second widgets, the electronic device 101 may dispose visual objects indicating the second widgets in a user interface screen when displaying the screen 407 (or a visual object corresponding to the screen 407) on the cover display.

The electronic device 101 according to an embodiment may identify one or more first software applications based on the number of times of executions among software applications executed while displaying a wallpaper screen (e.g., the screen 403 of FIG. 4A) on a display. The electronic device 101 may group the one or more first widgets respectively corresponding to the one or more first software applications with a visual object 507-1.

Although not illustrated, the electronic device 101 according to an embodiment may change the order of the visual object 522-1 between the visual objects 522 in the state 520. For example, the electronic device 101 may change the order of the visual object 522-1 based on identifying a long press input on the visual object 522-1 during a specified time. However, it is not limited thereto.

Hereinafter, an example of an operation in which the electronic device 101 matches a cover screen and each of widgets will be described later with reference to FIG. 5C.

Referring to FIG. 5C, in a state 530, the electronic device 101 according to an embodiment may display a user interface screen 506 on the cover display 155. The state 530 may be referred to the state 505 of FIG. 5A. The electronic device 101 may identify a plurality of widgets matched to a visual object 507-1 based on displaying all of the visual object 507-1 among a plurality of visual objects 507 on the cover display 155. The plurality of widgets matched to the visual object 507-1 may include widgets (e.g., the widgets 400-1 and 400-2 of FIGS. 4A to 4B) set (or registered) to be available through the cover display 155 while the electronic device 101 displays a screen (e.g., the screen 403 of FIGS. 4A to 4B) corresponding to the visual object 507-1 on the cover display 155. Based on identifying the plurality of widgets matched to the visual object 507-1, the electronic device 101 may display, on the cover display 155, an indicator 531 indicating the number of the plurality of widgets. As an example, the number of visual elements included in the indicator 531 may be greater than the number of the plurality of widgets. Since visual elements indicating a page indicating the screen 526 of FIG. 5B and a page including the plurality of visual objects 507 are further included, the number of visual elements included in the indicator 531 may be more than the number of the plurality of widgets. However, it is not limited thereto.

The electronic device 101 according to an embodiment may identify a first input on a wallpaper screen while the wallpaper screen (e.g., the screen 403 of FIG. 4A) is displayed. In response to the first input, the electronic device 101 may display, on a display, the user interface screen 506, which includes the plurality of visual objects 507 that are changeable along a first direction 509-1 and that include a visual object 437-1 corresponding to the wallpaper screen and a visual object 437-2 corresponding to another wallpaper screen (e.g., the screen 407 of FIG. 4A) different from the wallpaper screen 507-1, in place of the wallpaper screen. For example, while the user interface screen 506 is displayed, in response to a second input corresponding to a second direction 509-2 different from the first direction for the user interface screen, user interface screens 521 and 546 capable of selecting whether to maintain execution of at least one widget among one or more widgets through the display may be displayed on the display in place of the displayed user interface screen.

The electronic device 101 according to an embodiment may identify a swipe input, along a first direction 509-1, indicating that at least one visual object among a plurality of visual objects 437 is selected. After identifying the input, the electronic device 101 may dispose widgets corresponding to the at least one visual object in the user interface screen 506. While identifying the swipe input along the first direction 509-1, the electronic device 101 may identify a swipe input along the second direction 509-2. The electronic device 101 may display at least one of the widgets on the cover display based on identifying the swipe input along the second direction 509-2.

While displaying the user interface screen 506, the electronic device 101 according to an embodiment may display the visual object 437-1 with greater emphasis than the visual object 437-2. While displaying the visual object 437-1 with greater emphasis, the electronic device 101 may display the user interface screen 546 as associated with the wallpaper screen 507-1 based at least in part on receiving an input along the second direction 509-2. Displaying the user interface screen 546 as associated with the wallpaper screen 507-1 may include displaying at least one of one or more widgets corresponding to the wallpaper screen 507-1. For example, displaying the user interface screen 546 as associated with the wallpaper screen 507-1 may include generating a first group of one or more widgets subsequently displayable from the wallpaper screen 507-1.

While displaying the user interface screen 506, the electronic device 101 according to an embodiment may display the visual object 437-1 with greater emphasis than the visual object 437-2. The electronic device 101 may display the visual object 437-2 with greater emphasis than the visual object 437-1 based on at least a portion of an input (e.g., the swipe input along the first direction 509-1) indicating that the visual object 437-2 is selected. While displaying the visual object 437-2, the electronic device 101 may display the user interface screen 546 as associated with a wallpaper screen (e.g., a wallpaper screen corresponding to the visual object 437-2) based at least in part on receiving the swipe input along the second direction 509-2. Displaying it as associated with the wallpaper screen may include, for example, an operation of generating a second group of one or more widgets subsequently executable from the wallpaper screen. The first group of one or more widgets subsequently displayable from the wallpaper screen 507-1 and the second group of the one or more widgets may have at least one other widget.

The electronic device 101 according to an embodiment may identify an input corresponding to the second direction 509-2 while a wallpaper screen is displayed on the display (e.g., the cover display 155). Based at least in part on the input, The electronic device 101 may display, on the display, a widget maintained to be executed through the display among one or more widgets, and may not display, on the display, another widget not maintained to be executed through the display among the one or more widgets.

For example, in the state 500 of FIG. 5A, the electronic device 101 may change the screen 403 to the visual object 507-1 in response to a swipe input based on the first direction 509-2. The electronic device 101 may enter the state 530 based on gradually reducing a size of the screen 403 to a size of the visual object 507-1. The electronic device 101 may provide an animation effect in which the size of the screen 403 is reduced according to the swipe input.

The electronic device 101 according to an embodiment may enter a state 532 for displaying visual objects 537 indicating a plurality of widgets matched to the visual object 507-1 in response to a swipe input having the second direction 509-2 in the state 530 where the visual object 507-1 is displayed. For example, the electronic device 101 may gradually change a position of the visual object 507-1 according to the swipe input. The electronic device 101 may control the visual object 507-1 to move according to the swipe input. While moving the visual object 507-1, the electronic device 101 may display a visual object 537-1 indicating a widget matched to the visual object 507-1. The electronic device 101 may display the visual object 537-1 moving along the second direction 509-2 in response to the swipe input. The electronic device 101 may display a navigation bar 533 based on displaying the visual object 537-1. Based on displaying the visual object 537-1, the electronic device 101 may display an indicator 531-1 indicating an order corresponding to the visual object 537-1 among the plurality of visual objects 537. The electronic device 101 may emphasize and display a visual element corresponding to the order in the indicator 531-1. However, it is not limited thereto.

The electronic device 101 according to an embodiment may identify whether to add (maintain or remove) widgets based on identifying an input on a visual object 538. The electronic device 101 may display the indicator 523 of FIG. 5B on at least a portion of the widgets based on identifying the input on the visual object 538. The electronic device 101 may enter the state 520 in response to an input on the visual object 538.

For example, the electronic device 101 may identify a swipe input based on the second direction 509-2 in the state 532. The electronic device 101 may move the visual objects 537 along the second direction 509-2 based on the swipe input. The electronic device 101 may display, on the cover display 155, a visual object 537-2 having an order after the visual object 537-1 based on a specified order of the visual objects 537.

For example, in a state 534, the electronic device 101 may maintain display of the navigation bar 533. In the state 534, the electronic device 101 may display the visual object 537-2. The visual object 537-2 may indicate a widget of a timer software application. The widget of the timer software application may be used to measure a time. The visual object 537-2 may include a visual object 537-21 indicating a multi-timer. The visual object 537-2 may further include an icon for starting or stopping a timer.

The electronic device 101 according to an embodiment may enter a state 540 in response to a swipe input having the first direction 509-1 in the state 530. In the state 540, the electronic device 101 may display a visual object 507-2 in the user interface screen 506. The visual object 507-2 may correspond to the screen 407. The electronic device 101 may identify widgets (e.g., the widgets 405-1 and 405-2 of FIG. 4B) corresponding to the visual object 507-2 based on displaying the visual object 507-2. The electronic device 101 may align visual objects 547 indicating the widgets in the user interface screen 506. The electronic device 101 may display an indicator 541 indicating a position and/or an order of the widgets based on identifying the widgets. The electronic device 101 may change the indicator 531 to the indicator 541 by identifying the widgets based on entering the state 540 in response to the swipe input having the first direction 509-1 in the state 530.

In the state 540, the electronic device 101 according to an embodiment may concurrently display the indicator 541 indicating widgets matched to the visual object 507-2 while displaying the visual object 507-2. The electronic device 101 may identify a swipe input performed along the second direction 509-2 based on displaying the visual object 507-2.

In a state 542, the electronic device 101 according to an embodiment may display the user interface screen 546 including the one or more visual objects 547 indicating one or more widgets matched to the visual object 507-2. The state 542 may be referred to as an editing mode for identifying whether to maintain the one or more widgets. The electronic device 101 may concurrently display indicators for identifying whether to maintain the one or more widgets while displaying the one or more visual objects 547. For example, the electronic device 101 may change from the indicator 541 to an indicator 541-1 based on identifying the swipe input in the state 540. The electronic device 101 may indicate a visual element displayed by emphasizing based on corresponding to at least one of one or more visual objects using the indicator 541-1.

In response to a swipe input having the second direction 509-2 in the state 542, the electronic device 101 according to an embodiment may display a visual object 547-2 having an order next to a visual object 547-1. Based on displaying the visual object 547-2, the electronic device 101 may emphasize and display a visual element included in the indicator 541-1 and corresponding to the visual object 547-2.

For example, based on displaying the user interface screen 546 in the state 542, the electronic device 101 may determine whether to register the one or more widgets matched to the visual object 507-2. However, it is not limited thereto. As an example, as described above in FIG. 5B, the electronic device 101 may register one or more widgets available through the cover display independently of a plurality of visual objects using the editing mode or may cancel registration of at least one of the registered one or more widgets.

In a state 544 according to an embodiment, the electronic device 101 may identify an input on at least a portion of the user interface screen 546. The input may include an input indicating termination of the editing mode. The electronic device 101 may enter the state 405 of FIGS. 4A to 4B in response to the input. However, it is not limited thereto.

For example, the electronic device 101 may display a screen (e.g., the screen 407 of FIGS. 4A to 4B) corresponding to the visual object 507-2 on the cover display 155. The electronic device 101 may identify a swipe input based on the second direction 509-2 based on displaying the screen on the cover display 155. The electronic device 101 may display, on the cover display 155, at least one widget indicating at least one visual object among the visual objects 547 based on identification of the swipe input.

In a case of displaying the screen (e.g., the screen 407 of FIG. 4A) corresponding to the visual object 507-2 on the cover display 155, the electronic device 101 according to an embodiment may dispose widgets indicating the visual objects 547 matched to the visual object 507-2 on the screen. For example, the screen on which the widgets are disposed may be referred to the screen 407 of FIG. 4A.

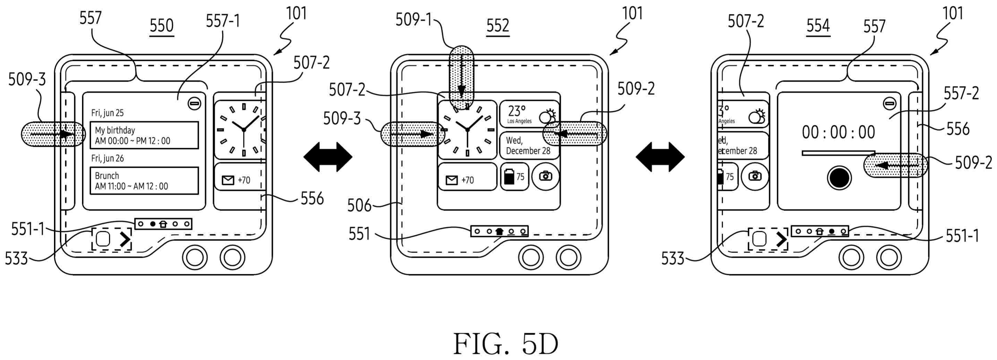

Referring to FIG. 5D, the electronic device 101 according to an embodiment may display a visual object 507-2 in a state 552. For example, based on displaying the visual object 507-2, the electronic device 101 may identify one or more widgets mapped to the visual object 507-2. The electronic device 101 may align visual objects 557 indicating one or more widgets in a user interface. For example, an order of the visual objects 507-2 and 557 aligned in a user interface screen 506 in the state 552 may be different from an order of visual objects 507-2 and 547 disposed in the user interface screen 506 in a state 540. As an example, in the state 540, the visual objects 547 may be disposed along a direction (e.g., a second direction 509-2), based on a position of the visual object 507-2. As an example, in a state 550, the visual objects 557 may be disposed in both directions (e.g., the second direction 509-2 and a third direction 509-3) based on the position of the visual object 507-2.

For example, in the state 552, the electronic device 101 according to an embodiment may display an indicator 551 indicating a position corresponding to the visual object 507-2. The electronic device 101 may identify a swipe input based on at least one direction among a first direction 509-1 or another direction opposite to the first direction 509-1. The electronic device 101 may display a visual object 507-1 in response to the swipe input. Based on displaying the visual object 507-1, the electronic device 101 may align visual objects 537 corresponding to the visual object 507-1 in the user interface screen 506 based on a position of the visual object 507-1. However, it is not limited thereto.

In the state 552, the electronic device 101 according to an embodiment may identify a swipe input based on the third direction 509-3. The electronic device 101 may display a visual object 557-1 among the visual objects 557 according to the swipe input. The visual object 557-1 may be disposed at a position along the second direction 509-2 from the visual object 507-2. The electronic device 101 may display, on the cover display 155, the visual object 557-1 among the visual objects 557 while changing the position of the visual object 507-2 along the third direction 509-3.

For example, in the state 550, the electronic device 101 may display an indicator 551-1 indicating a position of the visual object 557-1 based on displaying the visual object 557-1. Based on displaying the visual object 557-1, the electronic device 101 may display a navigation bar 553. The navigation bar 553 may be referred to the navigation bar 533 of FIG. 5C.

The electronic device 101 according to an embodiment may display the visual object 507-2 on the cover display 155 in response to a swipe input based on the second direction 509-2 in the state 552. The electronic device 101 may move the visual objects 557 concurrently with the visual object 507-2 along the second direction 509-2. The electronic device 101 may display, on the cover display, a visual object 557-2 adjacent along the third direction 509-3 from the visual object 507-2 among the visual objects 557. However, it is not limited thereto.

For example, in a state 554, the electronic device 101 may emphasize a visual element indicating a position of the visual object 557-2 and display it through the indicator 551-1. The electronic device 101 may display the navigation bar 533 in the state 554. The electronic device 101 may at least temporarily refrain from displaying a navigation bar while displaying the visual objects 507-1 and 507-2 indicating a wallpaper screen and may maintain the display of the navigation bar while displaying a visual object indicating a widget. However, it is not limited thereto.

For example, the electronic device 101 may change positions where a wallpaper screen and widgets are disposed in the user interface screen 506. Based on changing the positions, the electronic device 101 may change widgets to be displayed in response to a swipe input having a specified direction from a wallpaper screen.

The electronic device 101 according to an embodiment may identify a plurality of software applications executed in the electronic device 101 while displaying at least one screen (e.g., a wallpaper screen) on the cover display 155. The electronic device 101 may identify the number of times that the plurality of software applications are executed. For example, the electronic device 101 may match a plurality of widgets of the plurality of software applications with at least one screen based on the number of times that the plurality of software applications are executed.

For example, in a state (e.g., the state 400 of FIGS. 4A to 4B) of displaying a screen (e.g., the screen 403 of FIGS. 4A to 4B) corresponding to the visual object 507-1, the electronic device 101 may identify a plurality of first software applications executed by a processor (e.g., the processor 120 of FIG. 1) of the electronic device 101 during a specified time. Based on identifying the number of times that the plurality of first software applications are executed during the specified time, the electronic device 101 may match the screen (e.g., the screen 403 of FIGS. 4A to 4B) corresponding to the visual object 507-1 with the plurality of first software applications. For example, in the state 530, the electronic device 101 may identify a plurality of first widgets indicating each of the plurality of first software applications based on displaying the visual object 507-1. Based on identifying the plurality of first widgets, in the state 530, the electronic device 101 may arrange a plurality of first visual objects (e.g., the visual objects 537) in the user interface screen 506 according to an order of the plurality of first visual objects (e.g., the visual objects 537) indicating the plurality of first widgets corresponding to the visual object 507-1.

For example, in a state (e.g., the state 405 of FIGS. 4A to 4B) of displaying a screen (e.g., the screen 407 of FIGS. 4A to 4B) corresponding to the visual object 507-2 on the cover display 155, the electronic device 101 may identify one or more second software applications executed by the processor during a specified time. The electronic device 101 may identify the number of times that the one or more second software applications are executed during the specified time. Based on the number of times of executions of the one or more second software applications, the electronic device 101 may identify the one or more second software applications (or widgets of the one or more second software applications) to be used while displaying the screen. For example, the electronic device 101 may match the screen (e.g., the screen 407 of FIGS. 4A to 4B) corresponding to the visual object 507-2 with the one or more second software applications. For example, the electronic device 101 may link the widget management application 133 of FIG. 1 providing a screen with the one or more second software applications. Based on identifying the one or more second software applications, the electronic device 101 may display the visual objects 547 indicating one or more widgets of the one or more second software applications in response to a swipe input based on the second direction 509-2 while displaying the visual object 507-2 in the state 540. However, it is not limited thereto. For example, the electronic device 101 may identify the number of times of executions of a plurality of software applications executed by the processor at a specified position (or place). The electronic device 101 may match a screen (e.g., a wallpaper screen) displayed on the cover display with widgets of the plurality of software applications by using the specified position and the number of times of executions.

As described above, the electronic device 101 according to an embodiment may identify the input 501 while displaying the screen 403 on the cover display 155. The input may include a long press input or a swipe input. In response to the input 501, the electronic device 101 may enter an editing mode for editing the screen 403 or widgets. Based on identifying one input (e.g., the input 501), the electronic device 101 may determine whether to change a wallpaper screen or whether to register widgets according to a swipe input having a specified direction. The electronic device 101 may enhance user convenience by providing the user interface screen 506 for changing a wallpaper screen or widgets based on one mode.

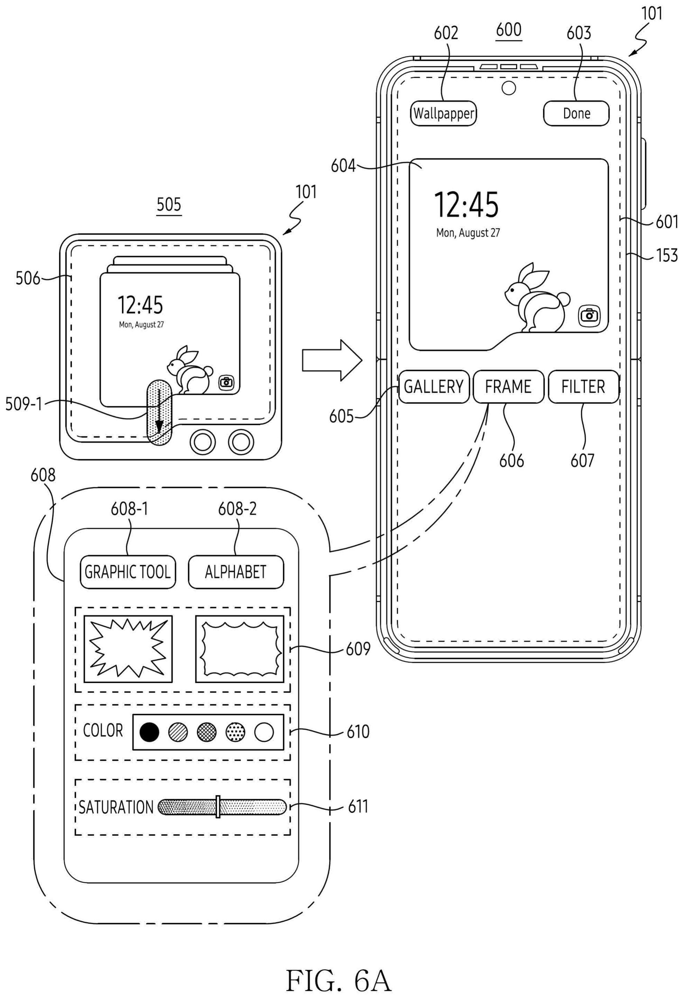

FIGS. 6A to 6D illustrate an example of a screen displayed on a flexible display by an electronic device based on identifying a change from a folded state to an unfolded state according to an embodiment. An electronic device 101 of FIGS. 6A to 6D may be included in the electronic device of FIG. 1. A state 505 of FIG. 6A may be included in the state 505 of FIG. 5A.

In the state 505 according to an embodiment, the electronic device 101 may identify a change from a folded state to an unfolded state while displaying a user interface screen 506. In the unfolded state, the electronic device 101 may display, on a flexible display 153, a user interface 601 including an image 604 indicating a visual object (e.g., the visual object 507-1 of FIG. 5A). The user interface 601 may be used to change at least a portion of the visual object (e.g., the visual object 507-1 of FIG. 5A) corresponding to the image 604.

For example, a housing of the electronic device 101 may include the first housing part 210 of FIG. 2A and the second housing part 220 of FIG. 2A that are rotatably coupled with each other. The display 150 of FIG. 1 may include the flexible display 153 extending from a side of the first housing part to a side of the second housing part, and a cover display disposed on another side 212 opposite to the side of the first housing part. The electronic device 101 may display a wallpaper screen (e.g., the screen 403 of FIG. 4A) in a folded state 203. While displaying a plurality of visual objects (e.g., a visual object corresponding to a wallpaper screen) through a user interface screen, the electronic device 101 may identify that the electronic device is changed from the folded state (e.g., a fold state) to at least partially unfolded state (e.g., the states 200 and 201 of FIG. 2A). For example, the electronic device 101 may display, on the flexible display 153, the user interface screen 601 for editing the wallpaper screen in the at least partially unfolded state.

For example, in a state 600 (e.g., the unfolded state), the electronic device 101 may change the image 604 using the user interface 601. The user interface 601 may include one or more icons for changing the image 604. For example, the electronic device 101 may display, on the flexible display 153, a screen (not illustrated) including one or more wallpaper images stored in the electronic device 101 in response to an input on an icon 602. The electronic device 101 may change a wallpaper image by using the screen including the one or more wallpaper images. In terms of being used to change wallpaper images, the user interface 601 may be referred to as a user setting screen, a user editing screen, a wallpaper editing screen, or a wallpaper setting screen.

For example, the electronic device 101 may initiate execution of a software application (e.g., a gallery software application) for displaying a plurality of images (e.g., photo images) stored in memory in response to an input on an icon 605. The electronic device 101 may display at least one of the plurality of images on the cover display. For example, the electronic device 101 may change the image 604 in the user interface 601 to an image indicating the at least one in response to an input indicating that the at least one is selected.

For example, the electronic device 101 may display a user interface 608 on the flexible display 153 in response to an input on an icon 606. The user interface 608 may provide functions for editing the image 604. For example, in response to an input on an icon 608-1, the electronic device 101 may display a frame image 609 to be overlapped with the image 604. The frame image 609 may include an image indicating a frame corresponding to an edge of the image 604, based on a size of the image 604. The user interface 608 may include a graphic user interface (GUI) 610 for changing a color of the frame image 609 and a graphic user interface 611 for changing saturation of the color of the frame image 609. As an example, the electronic device 101 may select a text object to be displayed overlapping at least a portion of the image 604 in response to an input on an icon 608-2. However, it is not limited thereto.

For example, in the state 600, the electronic device 101 may change values of pixels included in the image 604 in response to an input on an icon 607. For example, by using filter information, the electronic device 101 may identify an input indicating that at least one of a plurality of filters included in the filter information is selected. The electronic device 101 may change the values of the pixels included in the image to be matched to the selected at least one in response to the input. However, it is not limited thereto.

For example, in a case of identifying an input on an icon 603 for switching from the state 600 to another state, the electronic device 101 may temporarily cease displaying the user interface 601. The input on the icon 603 may include an input indicating that editing of the image 604 is completed.

Although not illustrated, in a case of identifying a swipe input performed along a first direction 509-1 in the state 600, the electronic device 101 may change from display of the image 604 indicating a visual object (e.g., the visual object 507-1 of FIG. 5A) to display of another image indicating another visual object (e.g., the visual object 507-2 of FIG. 5A). In a state of displaying the other image, the electronic device 101 may change at least a portion of the other image by using the user interface 601.

Although not illustrated, in a case of identifying a swipe input based on a second direction (e.g., the second direction 509-2 of FIG. 5A), the electronic device 101 may display, on the flexible display 153, a user interface for editing a widget. However, it is not limited thereto.

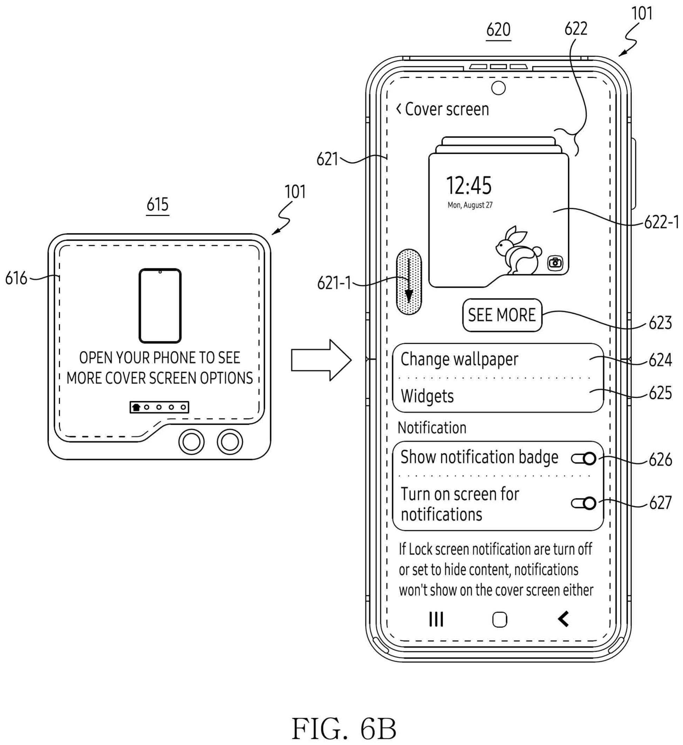

For example, in the state 505, the electronic device 101 may identify a swipe input with respect to the first direction 509-1 based on the number of times exceeding the number of a plurality of visual objects (e.g., the plurality of visual objects 507 of FIG. 5A). The electronic device 101 may enter a state 615 of FIG. 6B in response to the swipe input with respect to the first direction 509-1 based on the number of times in the state 505.

Referring to FIG. 6B, in the state 615, the electronic device 101 according to an embodiment may display a screen 616 indicating a notification for guiding to change a screen (e.g., the screens 403 and 407 of FIGS. 4A to 4B) to be displayed on the cover display. The electronic device 101 may identify a change from a folded state to an unfolded state based on displaying the screen 616. The electronic device 101 may identify a state 620 based on identifying the unfolded state.

In the state 620 (e.g., the unfolded state), the electronic device 101 according to an embodiment may display a user interface 621 on the flexible display 153. The user interface 621 may include images 622 indicating a plurality of visual objects (e.g., the plurality of visual objects 507 of FIG. 5A).

For example, the electronic device 101 may change an image 622-1 to another image in response to an input on a text object 624 included in the user interface 621. The electronic device 101 may replace the image 622-1 with another image in response to the input on the text object 624. The electronic device 101 may display a screen including a plurality of wallpaper images stored in memory in response to the input on the text object 624. In response to an input indicating that the other image is selected using the screen, the electronic device 101 may change the image 622-1 to another image.

For example, in the state 620, the electronic device 101 may identify an input on a text object 625 (e.g., a widget). In response to the input, the electronic device 101 may display, on the flexible display 153, a screen indicating whether to register widgets available through the cover display.

For example, the electronic device 101 may identify whether to display a view element (or a view object) indicating a notification on the cover display 155 by using a toggle object 626 in a form of a switch.

For example, the electronic device 101 may identify whether to display a screen indicating a notification using the cover display 155 by using a toggle object 627. However, it is not limited thereto.

For example, the electronic device 101 may initiate execution of a software application (e.g., a clock face application) providing a wallpaper screen in response to an input on an icon 623. The electronic device 101 may download a wallpaper screen from an external server based on the execution of the software application. However, it is not limited thereto.

For example, the electronic device 101 may change the image 622-1 to another image among the images 622 in response to a swipe input based on a first direction 621-1. The other image may correspond to the visual object 507-2 among the plurality of visual objects 507 of FIG. 5A. Based on changing to the other image, the electronic device 101 may edit the other image by using one or more functions included in the user interface 621. However, it is not limited thereto.

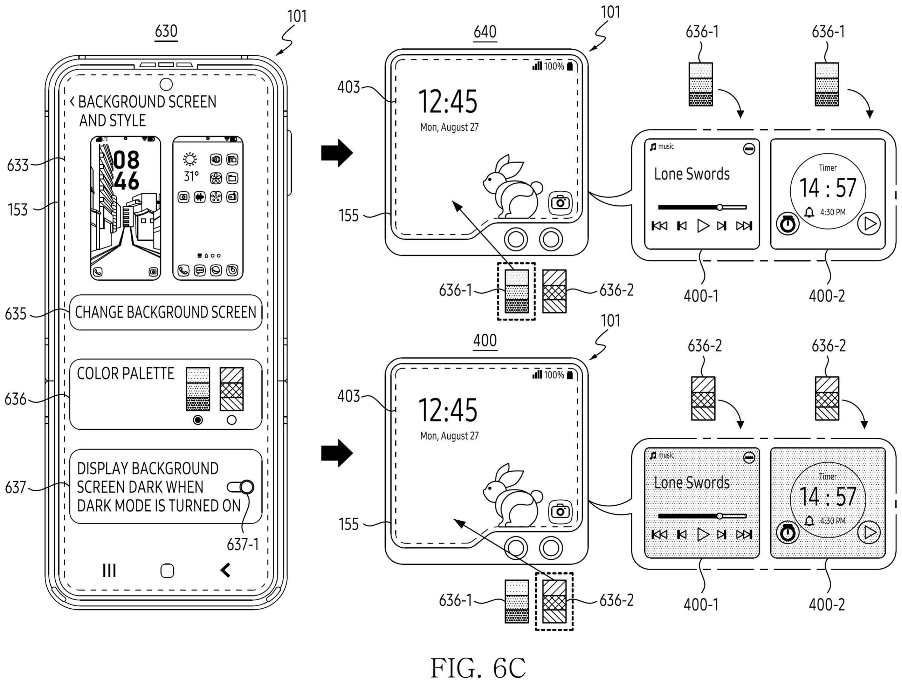

Referring to FIG. 6C, in a state 630 according to an embodiment, the electronic device 101 may display, on the flexible display 153, a screen 633 for changing a characteristic, a color, a theme, and/or a shape of a graphic user interface (GUI) available in the electronic device 101. The screen 633 may be an example of a user interface for changing a background screen (or a wallpaper screen) and a style of the graphic user interface.

For example, the screen 633 may include a visual object 635 for changing the background screen (or the wallpaper screen). In response to an input on the visual object 635, the electronic device 101 may display images for changing the background screen. The electronic device 101 may change the background screen in response to an input for selecting at least one of the images.

For example, the screen 633 may include a visual object 637 for displaying a background screen based on brightness less than or equal to specified brightness. In response to an input on an icon 637-1 having a toggle format, the electronic device 101 may determine whether to adjust the background screen to be less than or equal to the specified brightness.

For example, the screen 633 may include a visual object 636 for changing a color (or a characteristic) of a background screen and/or a widget screen matched to the background screen. The color may be changed in response to an input on the visual object 636. The electronic device 101 may include icons indicating a color included in the visual object 636. In response to an input indicating that at least one of the icons is selected, the electronic device 101 may identify a color corresponding to the at least one.

For example, in a state 640, the electronic device 101 may display a screen 403 based on a first color 636-1 among the first color 636-1 and a second color 636-2. The first color 636-1 may be configured with one or more colors. The first color 636-1 may indicate a combination of one or more colors. The first color 636-1 may be referred to as a color palette.

For example, the electronic device 101 may change colors of widgets 400-1 and 400-2 corresponding to the screen 403 based on displaying the screen 403 based on the first color 636-1. In a case of displaying at least one of the widgets 400-1 and 400-2 on the cover display 155, the electronic device 101 may display the at least one based on the first color 636-1. For example, in a state 400 of FIG. 6C, the electronic device 101 may display the screen 403 based on the second color 636-2. In a case of displaying the screen 403 having the second color 636-2, the electronic device 101 may change the colors of the widgets 400-1 and 400-2 matched to the screen 403 to the second color 636-2. In a case of changing a color of a main screen (e.g., the screen 403), the electronic device 101 may also change colors of widgets mapped to the main screen.

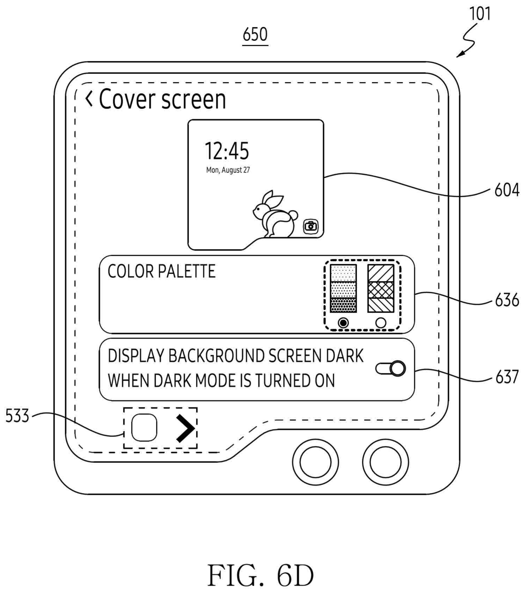

Referring to FIG. 6D, the electronic device 101 according to an embodiment may display, on the cover display, a user interface screen including at least a portion of a user interface screen 633 in a state 650. The state 650 may include the electronic device 101 in a folding state. The user interface screen displayed on the cover display may include a visual object 604, a visual object 636, and/or a visual object 637 corresponding to a wallpaper screen. The electronic device 101 may display, on the cover display, the user interface screen concurrently with a navigation bar 533.

As described above, the electronic device 101 according to an embodiment may edit screens (e.g., the screens 403 and 407 of FIGS. 4A to 4B) to be displayed on the cover display 155 by using a screen (e.g., the user interface screens 601, 621, and 633) displayed on the flexible display 153 having a relatively larger size than a size of the cover display 155. The electronic device 101 may display the user interface providing more functions for editing the screens (e.g., the screens 403 and 407 of FIGS. 4A to 4B) by using the flexible display 153.

FIG. 7 illustrates an example of a flowchart indicating an operation of an electronic device according to an embodiment. The electronic device of FIG. 7 may include the electronic device 101 of FIGS. 1 to 6B. At least one of operations of FIG. 7 may be performed by the electronic device 101 of FIG. 1. At least one of the operations of FIG. 7 may be controlled by the processor 120 of FIG. 1. Each of the operations of FIG. 7 may be performed sequentially, but is not necessarily performed sequentially. For example, an order of each of the operations may be changed, and at least two operations may be performed in parallel.

Referring to FIG. 7, in operation 710, while displaying a first wallpaper screen on a cover display, a processor according to an embodiment may identify a first input on the first wallpaper screen, in a folded state. For example, while displaying the first wallpaper screen (e.g., the screen 403 of FIG. 5A), the processor may identify a long press input (e.g., the input 501 of FIG. 5A) in which contact is maintained during a specified time. The electronic device 101 may enter the state 505 of FIG. 5A in response to identifying the long press input.

Referring to FIG. 7, in operation 720, the processor according to an embodiment may display a plurality of visual objects scrollable along a first direction (e.g., the first direction 509-1 of FIG. 5A) and corresponding to each of a plurality of wallpaper screens including the first wallpaper screen, in response to the first input. For example, according to an order of the plurality of visual objects (e.g., the plurality of visual objects 507 of FIG. 5A), the processor may display, on the cover display (e.g., the cover display 155 of FIG. 1), a visual object (e.g., the visual object 507-1 of FIG. 5A) indicating the first wallpaper screen among the plurality of visual objects. The processor may display an indicator (e.g., the indicator 508 of FIG. 5A) for indicating the number of widgets available through the cover display concurrently with the plurality of visual objects.

For example, the processor may identify an input performed along the first direction while displaying the visual object indicating the first wallpaper screen. In response to the input, the processor may display another visual object (e.g., the visual object 507-2 of FIG. 5A) indicating a second wallpaper screen (e.g., the screen 407 of FIGS. 4A to 4B). The processor may identify an input on at least a portion of the cover display while displaying the other visual object. In response to the input, the processor may identify selecting the other visual object. The processor may display a screen (e.g., the screen 407 of FIGS. 4A to 4B) on the cover display based on identifying the other visual object. For example, in a state of displaying the screen, the processor may identify one or more widgets (e.g., widgets indicating the visual objects 547 matched to the visual object 507-2 of FIG. 5C) matched to the screen. In response to a swipe input based on a second direction (e.g., the second direction 509-2 of FIG. 5A), the processor may sequentially display the one or more widgets on the cover display.

Referring to FIG. 7, in operation 730, the processor according to an embodiment may display one or more widgets concurrently with one or more indicators for identifying whether to maintain each of the one or more widgets in the cover display, in response to a second input performed along the second direction perpendicular to the first direction. For example, in the state 520 of FIG. 5B, the processor may sequentially dispose visual objects 522 indicating one or more widgets in a user interface screen 521. The processor may display a visual object 522-1 among the visual objects 522 on the cover display 155 in response to the second input. The processor may display indicators (e.g., the indicators 523 of FIG. 5B) for identifying whether to maintain each of the visual objects 522. In response to an input on at least one indicator among the indicators, the processor may cancel registration of a widget corresponding to the at least one indicator. For example, in a state 525, the processor may identify whether a widget is registered, by using a screen (e.g., the screen 527 of FIG. 5B) for registering a widget available through the cover display. As described above, in response to the first input, the processor may provide one user interface for identifying whether to change a wallpaper screen and/or widgets.

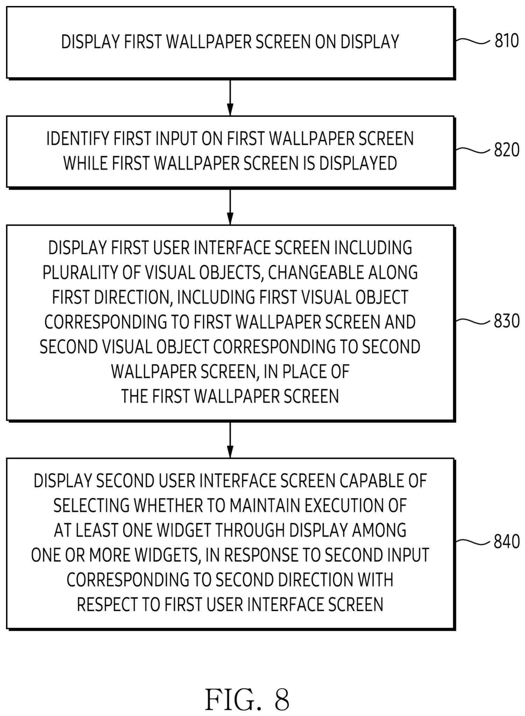

FIG. 8 illustrates an example of a flowchart indicating an operation of an electronic device according to an embodiment. The electronic device of FIG. 8 may include the electronic device 101 of FIGS. 1 to 6B. At least one of operations of FIG. 8 may be performed by the electronic device 101 of FIG. 1. At least one of the operations of FIG. 8 may be controlled by the processor 120 of FIG. 1. Each of the operations of FIG. 8 may be performed sequentially, but is not necessarily performed sequentially. For example, an order of each of the operations may be changed, and at least two operations may be performed in parallel.

Referring to FIG. 8, in operation 810, the electronic device according to an embodiment may display a first wallpaper screen (e.g., the screen 403 of FIG. 4A) on a display.

Referring to FIG. 8, in operation 820, the electronic device according to an embodiment may identify a first input on the first wallpaper screen while the first wallpaper screen is displayed. The first input may include a long press input.

Referring to FIG. 8, in operation 830, the electronic device according to an embodiment may display a first user interface screen including a plurality of visual objects (e.g., the plurality of visual objects 437 of FIG. 4A), changeable along a first direction (e.g., the first direction 509-1 of FIG. 5A), including a first visual object (e.g., the visual object 437-1 of FIG. 4A) corresponding to the first wallpaper screen and a second visual object (e.g., the visual object 437-2 of FIG. 4A) corresponding to a second wallpaper screen (e.g., the screen 407 of FIG. 4A), in place of the first wallpaper screen.

Referring to FIG. 8, in operation 840, the electronic device according to an embodiment may display a second user interface screen capable of selecting whether to maintain (or remove or add) execution of at least one widget through the display among one or more widgets, in response to a second input (e.g., a swipe input) corresponding to a second direction (e.g., the second direction 509-2 of FIG. 5A) with respect to the first user interface screen.

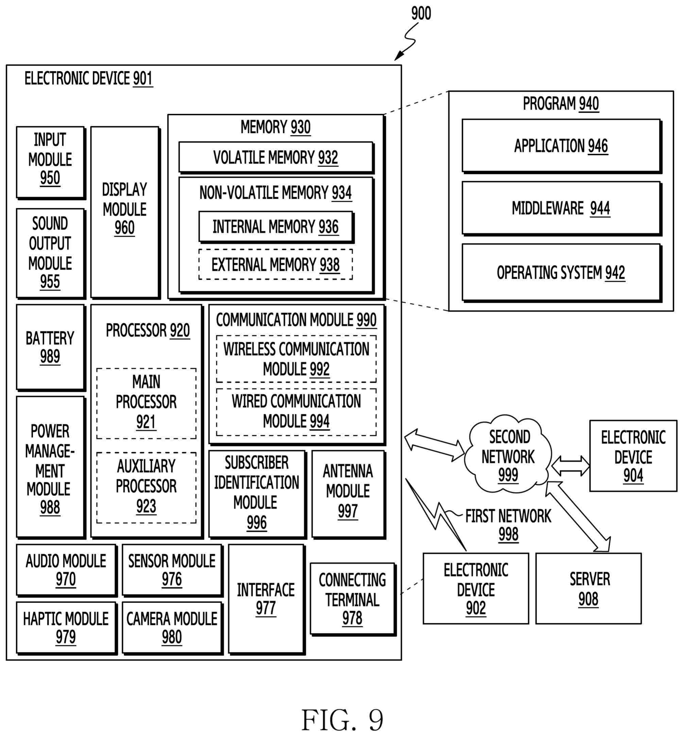

FIG. 9 is a block diagram illustrating an electronic device 901 in a network environment 900 according to various embodiments. Referring to FIG. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The electronic device 901 of FIG. 9 may be referred to the electronic device 101 of FIG. 1.

In response to an input for changing a cover screen displayed on a cover display, an electronic device according to an embodiment may display a user interface for editing the cover screen and a widget of a software application through the cover display. A method for editing the cover screen and the widget may be required by the electronic device based on one input.

As described above, according to an embodiment, an electronic device (e.g., the electronic device 101 of FIG. 1) may include a housing including a first housing part (e.g., the first housing part 210 of FIG. 2A) and a second housing part (e.g., the second housing part 220 of FIG. 2A) rotatably coupled to the first housing part, a flexible display (e.g., the flexible display 153 of FIG. 1) extending from a side (e.g., the first side 211 of FIG. 2A) of the first housing part to a side (e.g., the third side 221 of FIG. 2A) of the second housing part, a cover display (e.g., the cover display 155 of FIG. 1) positioned on another side (e.g., the second side 212 of FIG. 2A) opposite to the side of the first housing part where the flexible display is positioned, at least one processor (e.g., the processor 120 of FIG. 1) comprising processing circuitry, and memory 130 comprising one or more storage mediums storing instructions. The instructions may be configured to, when executed by the at least one processor individually or collectively, cause the electronic device to, in a folded state (e.g., the state 203 of FIG. 2B) where the side of the first housing part and the side of the second housing part face each other, while displaying a first wallpaper screen (e.g., the state 403 of FIGS. 4A to 4B) on the cover display, identify a first input on the first wallpaper screen. The at least one processor may cause the electronic device to, in response to the first input, display a plurality of visual objects (e.g., the plurality of visual objects 507 of FIG. 5A) changeable along a first direction (e.g., the first direction 509-1 of FIG. 5A) and corresponding to each of a plurality of wallpaper screens including the first wallpaper screen. The instructions, when executed by the at least one processor individually or collectively, may cause the electronic device to, while displaying at least one visual object among the plurality of visual objects, in response to a second input performed along a second direction (e.g., the second direction 509-2 of FIG. 5A) perpendicular to the first direction, display one or more widgets (e.g., the first widget 135-1 of FIG. 1 and the second widget 137-1 of FIG. 1) matched to the at least one visual object and provided from one or more software applications (e.g., the first software application 135 of FIG. 1 and the second software application 137 of FIG. 1) installed in the electronic device.

For example, the instructions, when executed by the at least one processor individually or collectively, may cause the electronic device to, while displaying the plurality of visual objects, in response to a third input performed along the first direction, identify the at least one visual object (e.g., the visual object 507-2 of FIG. 5A) among the plurality of visual objects. The instructions, when executed by the at least one processor individually or collectively, may cause the electronic device to, in response to a fourth input indicating selecting at least one indicator among one or more indicators (e.g., the indicator 523 of FIG. 5B) for identifying whether to maintain each of the one or more widgets in the cover display, identify at least one widget among the one or more widgets. The instructions, when executed by the at least one processor individually or collectively, may cause the electronic device to display, on the cover display, a second wallpaper screen (e.g., the screen 407 of FIGS. 4A to 4B) matched to the at least one widget and indicating the at least one visual object.

For example, the instructions, when executed by the at least one processor individually or collectively, may cause the electronic device to identify a fifth input performed along the second direction while displaying the second wallpaper screen on the cover display. The instructions, when executed by the at least one processor individually or collectively, may cause the electronic device to, based on identifying the fifth input, display the at least one widget on the cover display.

For example, the indicators may be first indicators. The instructions, when executed by the at least one processor individually or collectively, may cause the electronic device to match at least a portion of the one or more widgets to each of the plurality of visual objects. The instructions, when executed by the at least one processor individually or collectively, may cause the electronic device to, in response to the third input, display, on the cover display, second indicators (e.g., the indicator 508 of FIG. 5A, the indicator 531 of FIG. 5C, or the indicator 541 of FIG. 5C) indicating the number of the at least one visual object and the at least one widget matched to the at least one visual object.

For example, the instructions, when executed by the at least one processor individually or collectively, may cause the electronic device to identify first software applications based on the number of executions among the software applications executed while displaying the first wallpaper screen on the cover display. The instructions, when executed by the at least one processor individually or collectively, may cause the electronic device to, in response to the first input, based on displaying the plurality of visual objects, match first widgets indicating the first software applications to a second visual object (e.g., the visual object 507-1 of FIG. 5A) indicating the first wallpaper screen among the plurality of visual objects.

For example, the instructions, when executed by the at least one processor individually or collectively, may cause the electronic device to display overlappingly, on at least a portion of the second wallpaper screen, icons (e.g., the icons 407-2, 408, 409, 410, 411, and 412 of FIGS. 4A to 4B) indicating the at least one widget.

For example, the instructions, when executed by the at least one processor individually or collectively, may cause the electronic device to initiate execution of at least one software application corresponding to the at least one widget in response to a sixth input indicating a selection of the icon.

For example, the instructions, when executed by the at least one processor individually or collectively, may cause the electronic device to, in response to the first input, identify a change from the folded state to an unfolded state (e.g., the state 200 of FIG. 2A) distinct from the folded state while displaying the plurality of visual objects. The instructions, when executed by the at least one processor individually or collectively, may cause the electronic device to, in the unfolded state, display, on the flexible display, a user interface (e.g., the user interface 601 of FIG. 6A or the user interface 621 of FIG. 6B) for editing the first wallpaper screen.

As described above, according to an embodiment, in a method of an electronic device (e.g., the electronic device 101 of FIG. 1), the method may comprise, in a folded state (e.g., the state 203 of FIG. 2B) where a side (e.g., the first side 211 of FIG. 2A) of a first housing part (e.g., the first housing part 210 of FIG. 2A) of the electronic device and a side (e.g., the third side 221 of FIG. 2A) of a second housing part (e.g., the second housing part 220 of FIG. 2A) of the electronic device face each other, while displaying a first wallpaper screen (e.g., the state 403 of FIGS. 4A to 4B) on a cover display (e.g., the cover display 155 of FIG. 1), identifying a first input on the first wallpaper screen. The method may comprise, in response to the first input, displaying a plurality of visual objects (e.g., the plurality of visual objects 507 of FIG. 5A) changeable along a first direction (e.g., the first direction 509-1 of FIG. 5A) and correspond to each of a plurality of wallpaper screens including the first wallpaper screen. The method may comprise, while displaying at least one visual object among the plurality of visual objects, in response to a second input performed along a second direction (e.g., the second direction 509-2 of FIG. 5A) perpendicular to the first direction, displaying one or more widgets (e.g., the first widget 135-1 of FIG. 1 and the second widget 137-1 of FIG. 1) matched to the at least one visual object and provided from one or more software applications (e.g., the first software application 135 of FIG. 1 and the second software application 137 of FIG. 1) installed in the electronic device.

For example, the method may comprise, while displaying the plurality of visual objects, in response to a third input performed along the first direction, identifying the at least one visual object among the plurality of visual objects. The method may comprise, in response to a fourth input indicating selecting at least one indicator among one or more indicators (e.g., the indicator 523 of FIG. 5B) for identifying whether to maintain each of the one or more widgets in the cover display, identifying at least one widget among the one or more widgets. The method may comprise displaying, on the cover display, a second wallpaper screen (e.g., the screen 407 of FIGS. 4A to 4B) matched to the at least one widget and indicating the at least one visual object.

For example, the displaying the second wallpaper screen may comprise identifying a fifth input performed along the second direction while displaying the second wallpaper screen on the cover display. The displaying the second wallpaper screen may comprise, based on identifying the fifth input, displaying the at least one widget on the cover display.

For example, the indicators may be first indicators. The method may comprise matching at least a portion of the one or more widgets to each of the plurality of visual objects. The method may comprise, in response to the third input, displaying, on the cover display, second indicators (e.g., the indicator 508 of FIG. 5A, the indicator 531 of FIG. 5C, or the indicator 541 of FIG. 5C) indicating the number of the at least one visual object and the at least one widget matched to the at least one visual object.

For example, the displaying the first wallpaper screen may comprise identifying first software applications based on the number of executions among the software applications executed while displaying the first wallpaper screen on the cover display. The displaying the first wallpaper screen may comprise, in response to the first input, based on displaying the plurality of visual objects, matching first widgets indicating the first software applications to a second visual object (e.g., the visual object 507-1 of FIG. 5A) indicating the first wallpaper screen among the plurality of visual objects.

For example, the displaying the second wallpaper screen may comprise displaying overlappingly, on at least a portion of the second wallpaper screen, icons (e.g., the icons 407-2, 408, 409, 410, 411, and 412 of FIGS. 4A to 4B) indicating the at least one widget.

For example, the method may comprise initiating execution of at least one software application corresponding to the at least one widget in response to a sixth input indicating a selection of the icon.

As described above, according to an embodiment, in a computer-readable storage medium storing one or more programs, the one or more programs may be configured to, when executed by a processor (e.g., the processor 120 of FIG. 1) of an electronic device (e.g., the electronic device 101 of FIG. 1), cause the electronic device to, in a folded state (e.g., the state 203 of FIG. 2B) where a side (e.g., the first side 211 of FIG. 2A) of a first housing part (e.g., the first housing part 210 of FIG. 2A) of the electronic device and a side (e.g., the third side 221 of FIG. 2A) of a second housing part (e.g., the second housing part 220 of FIG. 2A) of the electronic device face each other, while displaying a first wallpaper screen (e.g., the state 403 of FIGS. 4A to 4B) on a cover display (e.g., the cover display 155 of FIG. 1), identify a first input on the first wallpaper screen. The one or more programs may be configured to, when executed by the processor of the electronic device, cause the electronic device to, in response to the first input, display a plurality of visual objects (e.g., the plurality of visual objects 507 of FIG. 5A) changeable along a first direction (e.g., the first direction 509-1 of FIG. 5A) and correspond to each of a plurality of wallpaper screens including the first wallpaper screen. The one or more programs may be configured to, when executed by the processor of the electronic device, cause the electronic device to, while displaying at least one visual object among the plurality of visual objects, in response to a second input performed along a second direction (e.g., the second direction 509-2 of FIG. 5A) perpendicular to the first direction, display one or more widgets (e.g., the first widget 135-1 of FIG. 1 and the second widget 137-1 of FIG. 1) matched to the at least one visual object and provided from one or more software applications (e.g., the first software application 135 of FIG. 1 and the second software application 137 of FIG. 1) installed in the electronic device.

For example, the one or more programs may be configured to, when executed by the processor of the electronic device, cause the electronic device to, while displaying the plurality of visual objects, in response to a third input performed along the first direction, identify the at least one visual object among the plurality of visual objects. The one or more programs may be configured to, when executed by the processor of the electronic device, cause the electronic device to, in response to a fourth input indicating selecting at least one indicator among one or more indicators (e.g., the indicator 523 of FIG. 5B) for identifying whether to maintain each of the one or more widgets in the cover display, identify at least one widget among the one or more widgets. The one or more programs may be configured to, when executed by the processor of the electronic device, cause the electronic device to display, on the cover display, a second wallpaper screen matched to the at least one widget and indicating the at least one visual object.

For example, the one or more programs may be configured to, when executed by the processor of the electronic device, cause the electronic device to identify a fifth input performed along the second direction while displaying the second wallpaper screen on the cover display. The one or more programs may be configured to, when executed by the processor of the electronic device, cause the electronic device to, based on identifying the fifth input, display the at least one widget on the cover display.

For example, the indicators may be first indicators. The one or more programs may be configured to, when executed by the processor of the electronic device, cause the electronic device to match at least a portion of the one or more widgets to each of the plurality of visual objects. The one or more programs may be configured to, when executed by the processor of the electronic device, cause the electronic device to, in response to the third input, display, on the cover display, second indicators (e.g., the indicator 508 of FIG. 5A, the indicator 531 of FIG. 5C, or the indicator 541 of FIG. 5C) indicating the number of the at least one visual object and the at least one widget matched to the at least one visual object.

For example, the one or more programs may be configured to, when executed by the processor of the electronic device, cause the electronic device to identify first software applications based on the number of executions among the software applications executed while displaying the first wallpaper screen on the cover display. The one or more programs may be configured to, when executed by the processor of the electronic device, cause the electronic device to, in response to the first input, based on displaying the plurality of visual objects, match first widgets indicating the first software applications to a second visual object (e.g., the visual object 507-1 of FIG. 5A) indicating the first wallpaper screen among the plurality of visual objects.

As described above, according to an embodiment, an electronic device 101 may comprise a housing, a display 150 included in the housing, at least one processor 120 comprising processing circuitry, and memory 130 comprising one or more storage mediums storing instructions. The instructions, when executed by the at least one processor individually or collectively, may cause the electronic device to display a first wallpaper screen 403 on the display. The instructions, when executed by the at least one processor individually or collectively, may cause the electronic device to identify a first input on the first wallpaper screen while the first wallpaper screen is displayed. The instructions, when executed by the at least one processor individually or collectively, may cause the electronic device to, in response to the first input, display, on the display, a first user interface screen 506 in place of the displayed first wallpaper screen, the first user interface screen including a plurality of visual objects 507, changeable along a first direction 509-1, including a first visual object corresponding to the first wallpaper screen and a second visual object corresponding to a second wallpaper screen different from the first wallpaper screen. The instructions, when executed by the at least one processor individually or collectively, may cause the electronic device to, while the first user interface screen is displayed, in response to a second input corresponding to a second direction 509-2 different from the first direction, for the first user interface screen, display, on the display, a second user interface screen 521 or 546 in place of the first user interface screen, the second user interface screen capable of selecting whether to maintain execution of at least one widget among one or more widgets 135-1 and 137-1 installed in the electronic device through the display.

For example, the instructions, when executed by the at least one processor individually or collectively, may cause the electronic device to display one or more indicators 523 for identifying the selection for the at least one widget as at least a portion of the second user interface screen.

For example, the instructions, when executed by the at least one processor individually or collectively, may cause the electronic device to display, as at least a portion of the second interface screen, the one or more indicators as association with the at least one widget.

For example, the instructions, when executed by the at least one processor individually or collectively, may cause the electronic device to, as part of displaying the first user interface screen, display the first visual object with greater emphasis than the second visual object, based at least in part on the first input. The instructions, when executed by the at least one processor individually or collectively, may cause the electronic device to, based at least in part on the second input being received while the first visual object is displayed with greater emphasis than the second visual object, perform displaying the second user interface screen as associated with the first wallpaper screen.

For example, the instructions, when executed by the at least one processor individually or collectively, may cause the electronic device to receive a third input selecting the second visual object through the first user interface screen while the first visual object is displayed with greater emphasis than the second visual object. The instructions, when executed by the at least one processor individually or collectively, may cause the electronic device to, based at least in part on the third input, display the first user interface screen such that the second visual object is displayed with greater emphasis than the first visual object. The instructions, when executed by the at least one processor individually or collectively, may cause the electronic device to display the second user interface screen as associated with the second wallpaper screen, based at least in part on a fourth input corresponding to the second direction being received while the second visual object is displayed with greater emphasis than the first visual object.

For example, the instructions, when executed by the at least one processor individually or collectively, may cause the electronic device to generate a first group of one or more widgets subsequently displayable on the display from the first wallpaper screen, based at least in part on a first selection received from a user while performing displaying the second user interface screen as associated with the first wallpaper screen. The instructions, when executed by the at least one processor individually or collectively, may cause the electronic device to generate a second group of one or more widgets subsequently executable from the second wallpaper screen on the display, based at least in part on a second selection received from the user while performing displaying the second user interface screen as associated with the second wallpaper screen.

For example, the first group or the second group may have at least one other widget.

For example, the instructions, when executed by the at least one processor individually or collectively, may cause the electronic device to change a characteristic of at least one wallpaper screen among the first wallpaper screen or the second wallpaper screen from a first characteristic to a second characteristic. The instructions, when executed by the at least one processor individually or collectively, may cause the electronic device to, based at least in part on the change in the characteristic, change a characteristic of at least one widget included in a group corresponding to the at least one wallpaper screen among the first group and the second group to correspond to the second characteristic.

For example, the instructions, when executed by the at least one processor individually or collectively, may cause the electronic device to display the second visual object with greater emphasis than the first visual object in response to a third input corresponding to the first direction received before the second input while the first user interface screen is displayed. The instructions, when executed by the at least one processor individually or collectively, may cause the electronic device to display the second wallpaper screen on the display instead of the first user interface screen, based at least in part on a fourth input on the first user interface screen received in a state where the second visual object is displayed with greater emphasis than the first visual object.

For example, the instructions, when executed by the at least one processor individually or collectively, may cause the electronic device to identify a fifth input corresponding to the second direction while the second wallpaper screen is displayed on the display. The instructions, when executed by the at least one processor individually or collectively, may cause the electronic device to, based at least in part on the fifth input, display on the display a widget among the one or more widgets that is maintained to be executed through the display, and not display on the display another widget among the one or more widgets that is not maintained to be executed through the display.

For example, the instructions, when executed by the at least one processor individually or collectively, may cause the electronic device to, in response to the first input, display on the display an indicator 508, 531 or 541 indicating the number of one or more widgets subsequently executable from a state where the second wallpaper screen is displayed on the display, concurrently with the second visual object.

For example, the instructions, when executed by the at least one processor individually or collectively, may cause the electronic device to identify one or more first software applications based on the number of executions among software applications executed while the first wallpaper screen is displayed on the display. The instructions, when executed by the at least one processor individually or collectively, may cause the electronic device to group one or more first widgets, respectively corresponding to the one or more first software applications, with a first visual object 507-1.

For example, the instructions, when executed by the at least one processor individually or collectively, may cause the electronic device to display the second wallpaper screen such that an icon 407-2, 408, 409, 410, 411, or 412 indicating a widget displayable through the display after the second wallpaper screen is displayed on the display overlaps at least a portion of the second wallpaper screen.

For example, the instructions, when executed by the at least one processor individually or collectively, may cause the electronic device to, in response to a sixth input indicating a selection of the icon, execute a software application corresponding to the widget.

For example, the housing may comprise a first housing part 210 and a second housing part 220 that are rotatably coupled with each other. The display comprises a flexible display 153 extending from a side 211 of the first housing part to a side 221 of the second housing part, and a cover display 155 disposed on another side 212 of the first housing part opposite the side. The instructions, when executed by the at least one processor individually or collectively, may cause the electronic device to perform the display operation of the first wallpaper screen when the electronic device is in a folded state 203. The instructions, when executed by the at least one processor individually or collectively, may cause the electronic device to, in response to the first input, identify a change of the electronic device from the folded state to at least partially unfolded state 200 or 201 while the plurality of visual objects are displayed through the first user interface. The instructions, when executed by the at least one processor individually or collectively, may cause the electronic device to display a third user interface screen 601 or 621 for editing the first wallpaper screen on the flexible display in the at least partially unfolded state.

For example, the instructions, when executed by the at least one processor individually or collectively, may cause the electronic device to display a portion of a widget among the at least one widget, concurrently with the first visual object and the second visual object, as part of the first user interface screen displayed based on the first input.

For example, the instructions, when executed by the at least one processor individually or collectively, may cause the electronic device to, as part of the first user interface screen displayed based on the first input, not display a remaining portion of the widget concurrently with the first visual object and the second visual object.

For example, the instructions, when executed by the at least one processor individually or collectively, may cause the electronic device to, in the folded state of the electronic device, display, on the cover display, a fourth user interface screen including at least a portion of the third user interface screen for editing the first wallpaper screen.

As described above, according to an embodiment, in a method of an electronic device 101, the method may comprise displaying a first wallpaper screen 403 on a display. The method may comprise identifying a first input on the first wallpaper screen while the first wallpaper screen is displayed. The method may comprise, in response to the first input, displaying, on the display, a first user interface screen 506 in place of the first wallpaper screen, the first user interface screen including a plurality of visual objects 507, changeable along a first direction 509-1, including a first visual object corresponding to the first wallpaper screen and a second visual object corresponding to a second wallpaper screen different from the first wallpaper screen. The method may comprise, while the first user interface screen is displayed, for the first user interface screen, in response to a second input corresponding to a second direction 509-2 different from the first direction, displaying, on the display, a second user interface screen 521 or 546 in place of the first user interface screen, the second user interface screen capable of selecting whether to maintain execution of at least one widget among one or more widgets 135-1 and 137-1 installed in the electronic device through the display.

As described above, according to an embodiment, in a computer-readable storage medium storing one or more programs, the one or more programs may be configured to, when executed by a processor 120 of an electronic device 101, cause the electronic device to display a first wallpaper screen 403 on a display 150. The one or more programs may be configured to cause the electronic device to identify a first input on the first wallpaper screen while the first wallpaper screen is displayed. The one or more programs may be configured to cause the electronic device to, in response to the first input, display, on the display, a first user interface screen 506 in place of the first wallpaper screen, the first user interface screen including a plurality of visual objects 507, changeable along a first direction 509-1, including a first visual object corresponding to the first wallpaper screen and a second visual object corresponding to a second wallpaper screen different from the first wallpaper screen. The one or more programs may be configured to cause the electronic device to, while the first user interface screen is displayed, for the first user interface screen, in response to a second input corresponding to a second direction 509-2 different from the first direction, display, on the display, a second user interface screen 521 or 546 in place of the first user interface screen, the second user interface screen capable of selecting whether to maintain execution of at least one widget among one or more widgets 135-1 and 137-1 installed in the electronic device through the display.

## Claims

1. An electronic device (101), comprising:
a housing;
a display (150) of which at least a portion is accommodated in the housing;
at least one processor (120) comprising processing circuitry; and
memory (130), comprising one or more storage mediums, storing instructions,
wherein the instructions, when executed by the at least one processor individually or collectively, cause the electronic device to:
display a first wallpaper screen (403) on the display;
identify a first input on the first wallpaper screen while the first wallpaper screen is displayed;
in response to the first input, display, on the display, a first user interface screen (506) in place of the displayed first wallpaper screen, the first user interface screen including a plurality of visual objects (507), changeable along a first direction (509-1), including a first visual object corresponding to the first wallpaper screen and a second visual object corresponding to a second wallpaper screen different from the first wallpaper screen; and
while the first user interface screen is displayed, in response to a second input corresponding to a second direction (509-2) different from the first direction, for the first user interface screen, display, on the display, a second user interface screen (521, 546) in place of the first user interface screen, the second user interface screen capable of selecting whether to maintain execution of at least one widget among one or more widgets (135-1; 137-1) installed in the electronic device through the display.

2. The electronic device of claim 1,
wherein the instructions, when executed by the at least one processor individually or collectively, cause the electronic device to:
display one or more indicators (523) for identifying the selection for the at least one widget as at least a portion of the second user interface screen.

3. The electronic device of claim 2, wherein the instructions, when executed by the at least one processor individually or collectively, cause the electronic device to:
display, as at least a portion of the second interface screen, the one or more indicators as associated with the at least one widget.

4. The electronic device of claim 1, wherein the instructions, when executed by the at least one processor individually or collectively, cause the electronic device to:
as part of displaying the first user interface screen, display the first visual object with greater emphasis than the second visual object, based at least in part on the first input; and
based at least in part on the second input being received while the first visual object is displayed with greater emphasis than the second visual object, perform displaying the second user interface screen as associated with the first wallpaper screen.

5. The electronic device of claim 4, wherein the instructions, when executed by the at least one processor individually or collectively, cause the electronic device to:
receive a third input selecting the second visual object through the first user interface screen while the first visual object is displayed with greater emphasis than the second visual object;
based at least in part on the third input, display the first user interface screen such that the second visual object is displayed with greater emphasis than the first visual object; and
display the second user interface screen as associated with the second wallpaper screen, based at least in part on a fourth input corresponding to the second direction being received while the second visual object is displayed with greater emphasis than the first visual object.

6. The electronic device of claim 5, wherein the instructions, when executed by the at least one processor individually or collectively, cause the electronic device to:
generate a first group of one or more widgets subsequently displayable on the display from the first wallpaper screen, based at least in part on a first selection received from a user while performing displaying the second user interface screen as associated with the first wallpaper screen; and
generate a second group of one or more widgets subsequently executable from the second wallpaper screen on the display, based at least in part on a second selection received from the user while performing displaying the second user interface screen as associated with the second wallpaper screen.

7. The electronic device of claim 1, wherein the instructions, when executed by the at least one processor individually or collectively, cause the electronic device to:
display the second visual object with greater emphasis than the first visual object in response to a third input corresponding to the first direction received before the second input while the first user interface screen is displayed; and
display the second wallpaper screen on the display instead of the first user interface screen, based at least in part on a fourth input on the first user interface screen received in a state where the second visual object is displayed with greater emphasis than the first visual object.

8. The electronic device of claim 7, wherein the instructions, when executed by the at least one processor individually or collectively, cause the electronic device to:
identify a fifth input corresponding to the second direction while the second wallpaper screen is displayed on the display; and
based at least in part on the fifth input, display on the display a widget among the one or more widgets that is maintained to be executed through the display, and not display on the display another widget among the one or more widgets that is not maintained to be executed through the display.

9. The electronic device of claim 7, wherein the instructions, when executed by the at least one processor individually or collectively, cause the electronic device to:
in response to the first input, display on the display an indicator (508; 531; 541) indicating the number of one or more widgets subsequently executable from a state where the second wallpaper screen is displayed on the display, concurrently with the second visual object.

10. The electronic device of claim 7, wherein the instructions, when executed by the at least one processor individually or collectively, cause the electronic device to:
identify one or more first software applications based on the number of executions among software applications executed while the first wallpaper screen is displayed on the display; and
group one or more first widgets, respectively corresponding to the one or more first software applications, with a first visual object (507-1).

11. The electronic device of claim 7, wherein the instructions, when executed by the at least one processor individually or collectively, cause the electronic device to:
display the second wallpaper screen such that an icon (407-2; 408; 409; 410; 411; 412) indicating a widget displayable through the display after the second wallpaper screen is displayed on the display overlaps at least a portion of the second wallpaper screen.

12. The electronic device of claim 1,
wherein the housing comprises a first housing part (210) and a second housing part (220) that are rotatably coupled with each other,
wherein the display comprises a flexible display (153) extending from a side (211) of the first housing part to a side (221) of the second housing part, and a cover display (155) disposed on another side (212) of the first housing part opposite the side, and
wherein the instructions, when executed by the at least one processor individually or collectively, cause the electronic device to:
perform the display operation of the first wallpaper screen when the electronic device is in a folded state (203);
in response to the first input, identify a change of the electronic device from the folded state to at least partially unfolded state (200, 201) while the plurality of visual objects are displayed through the first user interface; and
display a third user interface screen (601; 621) for editing the first wallpaper screen on the flexible display in the at least partially unfolded state.

13. The electronic device of claim 1, wherein the instructions, when executed by the at least one processor individually or collectively, cause the electronic device to:
display a portion of a widget among the at least one widget, concurrently with the first visual object and the second visual object, as part of the first user interface screen displayed based on the first input.

14. A method of an electronic device (101), the method comprising:
displaying a first wallpaper screen (403) on the display;
identifying a first input on the first wallpaper screen while the first wallpaper screen is displayed;
in response to the first input, displaying, on the display, a first user interface screen (506) in place of the displayed first wallpaper screen, the first user interface screen including a plurality of visual objects (507), changeable along a first direction (509-1), including a first visual object corresponding to the first wallpaper screen and a second visual object corresponding to a second wallpaper screen different from the first wallpaper screen; and
while the first user interface screen is displayed, in response to a second input corresponding to a second direction (509-2) different from the first direction, for the first user interface screen, displaying, on the display, a second user interface screen (521, 546) in place of the first user interface screen, the second user interface screen capable of selecting whether to maintain execution of at least one widget among one or more widgets (135-1; 137-1) installed in the electronic device through the display.

15. A computer-readable storage medium storing one or more programs, wherein the one or more programs are configured to, when executed by a processor of an electronic device, cause the electronic device to:
display a first wallpaper screen (403) on the display;
identify a first input on the first wallpaper screen while the first wallpaper screen is displayed;
in response to the first input, display, on the display, a first user interface screen (506) in place of the displayed first wallpaper screen, the first user interface screen including a plurality of visual objects (507), changeable along a first direction (509-1), including a first visual object corresponding to the first wallpaper screen and a second visual object corresponding to a second wallpaper screen different from the first wallpaper screen; and
while the first user interface screen is displayed, in response to a second input corresponding to a second direction (509-2) different from the first direction, for the first user interface screen, display, on the display, a second user interface screen (521, 546) in place of the first user interface screen, the second user interface screen capable of selecting whether to maintain execution of at least one widget among one or more widgets (135-1; 137-1) installed in the electronic device through the display.
